# EUROPEAN PATENT SPECIFICATION

(11) **EP 3 267 717 B1**
(45) Date of publication and mention of the grant of the patent: **19.06.2019**
(21) Application number: 15888344.7
(22) Date of filing: 19.10.2015
(51) Int. Cl.: H04W 24/10

(54) **INTER-SYSTEM MEASUREMENT METHOD, RELATED DEVICE AND MEASUREMENT SYSTEM**
SYSTEMÜBERGREIFENDES MESSVERFAHREN, ZUGEHÖRIGE VORRICHTUNG UND MESSSYSTEM
PROCÉDÉ DE MESURE INTER-SYSTÈME, DISPOSITIF ASSOCIÉ ET SYSTÈME DE MESURE

(30) Priority: 10.04.2015 WO PCT/CN2015/076337
(43) Date of publication of application: 10.01.2018
(73) Proprietor: Huawei Technologies Co. Ltd., Shenzhen, Guangdong 518129 (CN)
(72) Inventor: WU, Xiaobo, Shenzhen Guangdong 518129 (CN)
(74) Representative: Körber, Martin Hans
(86) International application number: PCT/CN2015/092215
(87) International publication number: WO 2016/161793

(56) References cited:
- WO-A2-2014/182772
- CN-A- 101 610 538
- CN-A- 102 802 188
- US-A1- 2014 378 140
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 10)", 3GPP STANDARD ; TECHNICAL SPECIFICATION ; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V10.12.0, 19 December 2014 (2014-12-19), pages 1-195, XP051294108, [retrieved on 2014-12-19]
- NTT DOCOMO ET AL: "Inactivity timer disablement", 3GPP DRAFT; R2-080432, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sevilla, Spain; 20080122, 22 January 2008 (2008-01-22), XP050138282, [retrieved on 2008-01-22]
- MOTOROLA: "Defining LTE monitoring requirements for RRC Connected state with DRX", 3GPP DRAFT; R4-072092 - DEFINING LTE MONITORING REQUIREMENTS FOR RRC CONNECTED STATE WITH DRX, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Jeju, Korea; 20071105 - 20071109, 2 November 2007 (2007-11-02), XP050611892, [retrieved on 2007-11-02]
- SAMSUNG: "Connected Mode DRX Configuration for NB IoT", 3GPP DRAFT; R2-163779 CONNECTED MODE DRX CONFIGURATION FOR NB IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG2, no. Nanjing; 20160523 - 20160527 22 May 2016 (2016-05-22), XP051105187, Retrieved from the Internet: URL:http://www.3gpp.org/ftp/Meetings_3GPP_ SYNC/RAN2/Docs/ [retrieved on 2016-05-22]

## Description

### TECHNICAL FIELD

The present invention relates to the wireless communications field, and in particular, to an inter-RAT measurement method, a related apparatus, and a measurement system.

### BACKGROUND

Second generation (Second Generation, 2G for short) or third generation (Third Generation, 3G for short) networks such as the Global System for Mobile Communications (Global System of Mobile Communication, GSM for short) and Wideband Code Division Multiple Access (Wideband Code Division Multiple Access, WCDMA for short) have basically achieved full coverage.

As Long Term Evolution (Long Term Evolution, LTE for short) network technologies develop, these LTE networks have covered some urban areas and traffic hotspot areas. In this case, the LTE networks and the 2G/3G networks coexist in current communications networks. Because the LTE networks are in a construction stage, some LTE networks may support only a data service, but not support a voice service. When user equipment (User Equipment, UE for short) in an LTE network initiates a voice service, the UE needs to first fall back to a 2G/3G network having a circuit switched (Circuit Switched, CS for short) domain, so as to perform the voice service in the 2G/3G network having the CS domain. The technology for handover from a CS domain of the LTE network to the CS domain of the 2G/3G network is referred to as a circuit switched fallback (Circuit Switched Fallback, CSFB for short) technology. However, some LTE networks may support a voice service, so that UE may use a voice over LTE (Voice over LTE, VoLTE for short) service. However, because the LTE networks have not achieved full coverage, if UE that is currently performing a VoLTE service is in a boundary area of an LTE network and a 2G/3G network, or is about to enter an area covered by only a 2G/3G network, the VoLTE service usually needs to be handed over to a CS domain of the 2G/3G network, so as to avoid voice interruption.

Before the handover from the LTE network to the CS domain of the 2G/3G network, signal quality of the 2G/3G network usually needs to be measured in the LTE network, that is, inter-RAT measurement is to be performed, so that the UE in the LTE network selects a 2G/3G cell whose signal quality meets a requirement.

In the prior art, inter-RAT measurement may be performed by means of connected-discontinuous reception (Connected-Discontinuous Reception, C-DRX) measurement optimization. Performing inter-RAT measurement by using the C-DRX measurement optimization is: performing, by UE, inter-RAT measurement by using a dormant period of a C-DRX cycle, so as to effectively shorten an inter-RAT measurement time.

However, when the UE performs inter-RAT measurement by using the C-DRX measurement optimization, and when the UE has to-be-transmitted data or signaling, the UE cannot be in a dormant period of a C-DRX cycle, and therefore, the UE cannot perform 2G/3G inter-RAT measurement by using the dormant period of the C-DRX cycle, and consequently, an inter-RAT measurement time is overlong, and then a voice or data service is interrupted or drops. For example, a voice session is interrupted during a CSFB call, or a voice session is interrupted when a VoLTE service is being performed.

"3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 10)", vol. RAN WG2, no. V10.12.0, 2014-12-19, page 1- 195, discloses that the UE follows the measurement parameters specified by RRC directed from the E-UTRAN.

### SUMMARY

The present invention is defined by the appended claims.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart 1 of an inter-RAT measurement method according to an embodiment of the present invention;
FIG. 2 is a schematic flowchart 2 of an inter-RAT measurement method according to an embodiment of the present invention;
FIG. 3 is a schematic flowchart 3 of an inter-RAT measurement method according to an embodiment of the present invention;
FIG. 4 is a schematic flowchart 4 of an inter-RAT measurement method according to an embodiment of the present invention;
FIG. 5 is a schematic flowchart 5 of an inter-RAT measurement method according to an embodiment of the present invention;
FIG. 6 is a schematic flowchart 6 of an inter-RAT measurement method according to an embodiment of the present invention;
FIG. 7 is a schematic flowchart 7 of an inter-RAT measurement method according to an embodiment of the present invention;
FIG. 8 is a schematic flowchart 8 of an inter-RAT measurement method according to an embodiment of the present invention;
FIG. 9 is a schematic flowchart 9 of an inter-RAT measurement method according to an embodiment of the present invention;
FIG. 10 is a schematic flowchart 10 of an inter-RAT measurement method according to an embodiment of the present invention;
FIG. 11 is a schematic flowchart 11 of an inter-RAT measurement method according to an embodiment of the present invention;
FIG. 12A and FIG. 12B are a schematic interaction diagram of an inter-RAT measurement method according to an embodiment of the present invention;
FIG 13 is a schematic structural diagram 1 of a control node according to an embodiment of the present invention;
FIG. 14 is a schematic structural diagram 2 of a control node according to an embodiment of the present invention;
FIG 15 is a schematic structural diagram 3 of a control node according to an embodiment of the present invention;
FIG. 16 is a schematic structural diagram 4 of a control node according to an embodiment of the present invention;
FIG. 17 is a schematic structural diagram 5 of a control node according to an embodiment of the present invention;
FIG. 18 is a schematic structural diagram 6 of a control node according to an embodiment of the present invention;
FIG. 19 is a schematic structural diagram 7 of a control node according to an embodiment of the present invention;
FIG. 20 is a schematic structural diagram 8 of a control node according to an embodiment of the present invention;
FIG. 21 is a schematic structural diagram 9 of a control node according to an embodiment of the present invention;
FIG. 22 is a schematic structural diagram 1 of UE according to an embodiment of the present invention;
FIG 23 is a schematic structural diagram 2 of UE according to an embodiment of the present invention;
FIG. 24 is a schematic structural diagram of an inter-RAT measurement apparatus according to an embodiment of the present invention; and
FIG. 25 is a schematic structural diagram of a measurement system according to an embodiment of the present invention.

### DESCRIPTION OF EMBODIMENTS

To make description of the following embodiments clear and concise, first, several concepts are described briefly below:
First, in terms of C-DRX, in a communications network, a data flow over packet is usually bursty, and when there is no to-be-transmitted data, a receiver circuit of UE may be turned off to reduce power consumption, so as to increase a battery usage time. This is an origin of the C-DRX. A basic mechanism of the C-DRX is configuring a C-DRX cycle for UE in a radio resource control_connected (Radio Resource Control_Connected, RRC_CONNECTED for short) state. The C-DRX cycle includes an active period and a dormant period. In the active period, the UE is allowed to listen on a physical downlink control channel (Physical Downlink Control Channel, PDCCH for short) and receive data from the physical downlink control channel. In the dormant period, the UE does not receive data from a PDCCH, so as to reduce power consumption.

Second, in terms of a VoLTE service, an existing 2G/3G core network includes a packet switched (Packet Switched, PS for short) domain and a CS domain, and a voice service and a CS supplementary service are supported by the CS domain. An LTE core network does not include a CS domain, but only has a PS domain, and therefore, is referred to as an evolved packet system (Evolved Packet System, EPS for short). To provide a voice service, the LTE network needs to include an IP multimedia subsystem (IP Multimedia Subsystem, IMS for short), and the IMS is a session control layer. Therefore, a voice service in the LTE/EPS system is referred to as a VoLTE service or an IMS voice over IP (voice over IP, VoIP for short) service.

Thirdly, in terms of inter-RAT measurement, the inter-RAT measurement means that UE in a network standard measures signal quality of another network standard. For example, UE in an LTE network measures signal quality of a 2G/3G network. The inter-RAT measurement usually occurs before an inter-RAT interoperation is performed, for example, before handover from a first RAT network to a CS domain of a second RAT network is performed; or before handover from a first RAT network to a PS domain of a second RAT network is performed; or before cell reconstruction from a first RAT network to a second RAT network is performed.

It should be noted that in the embodiments of the present invention, the first RAT network may be an LTE network, the second RAT network may be a 2G or 3G network, and a control node in the first RAT network may be an evolved NodeB (evolved NodeB, eNB for short). Certainly, provided that the first RAT network and the second RAT network are networks of different network standards, the first RAT network and the second RAT network may be other RAT networks. The embodiments of the present invention set no specific limitation thereto.

It should be noted that, to facilitate clear description of the technical solutions in the embodiments of the present invention, words such as "first", "second", and "third" are used in this specification to distinguish between same items or similar items with basically same functions or purposes. A person skilled in the art may understand that the words such as "first", "second", and "third" do not restrict a quantity and an implementation sequence.

The following clearly and completely describes the technical solutions in the embodiments of the present invention with reference to the accompanying drawings in the embodiments of the present invention. Apparently, the described embodiments are merely a part but not all of the embodiments of the present invention. In the following description, for a purpose of description instead of limitation, some specific details are described to facilitate clear understanding. In some embodiments, detailed description of a well-known apparatus, circuit, and method is omitted, so as to avoid blurred description caused by unnecessary details. In the thorough description, same reference numerals and same names refer to same or similar elements.

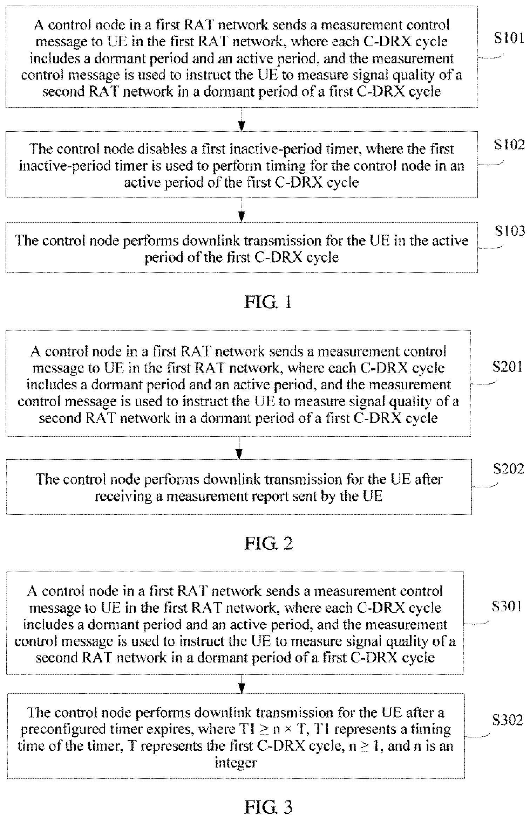

An embodiment of the present invention provides an inter-RAT measurement method. As shown in FIG. 1, the method includes the following steps:
S101. A control node in a first RAT network sends a measurement control message to UE in the first RAT network, where each C-DRX cycle includes a dormant period and an active period, and the measurement control message is used to instruct the UE to measure signal quality of a second RAT network in a dormant period of a first C-DRX cycle.
S102. The control node disables a first inactive-period timer, where the first inactive-period timer is used to perform timing for the control node in an active period of the first C-DRX cycle.
S103. The control node performs downlink transmission for the UE in the active period of the first C-DRX cycle.

Optionally, in step S101 in this embodiment of the present invention, the measurement control message may be an RRC connection reconfiguration message.

The measurement control message may include a measurement configuration parameter and a first C-DRX parameter.

The measurement configuration parameter may include related information required for measuring the signal quality of the second RAT network. For example, the measurement configuration parameter may include an object that the UE needs to measure, a cell list of the second RAT network, a report manner, a measurement identifier, an event parameter, or the like.

The first C-DRX parameter is used to configure the first C-DRX cycle for the UE, and the first C-DRX cycle may include the dormant period and the active period. In the dormant period of the first C-DRX cycle, the UE does not receive data from a PDCCH, so as to reduce power consumption. In the active period of the first C-DRX cycle, the UE listens on a PDCCH and receives data from the PDCCH. A time in which the UE continuously performs inter-RAT measurement may be adjusted by adjusting the first C-DRX parameter. Specifically, the first C-DRX parameter may be configured in the following manner: In the whole first C-DRX cycle, duration of the active period is enabled to be as short as possible while being greater than 0, and duration of the dormant period is enabled to be as long as possible while being less than duration of the first C-DRX cycle. Therefore, the UE may stay in the dormant period of the first C-DRX cycle for a relatively long time, and continuously measure the signal quality of the second RAT network in the dormant period of the first C-DRX cycle. Details are not described herein in this embodiment of the present invention.

Specifically, in step S102 in this embodiment of the present invention, there are two types of timers in the first C-DRX cycle: an active-period timer and an inactive-period timer. Both the two types of timers are used to perform timing in the active period of the first C-DRX cycle. The active-period timer is used to measure preconfigured duration of the active period of the first C-DRX cycle. For example, if the preconfigured duration of the active period of the first C-DRX cycle is 10 ms, duration of the active-period timer is set to 10 ms. When the UE enters the active period of the first C-DRX cycle, the active-period timer starts timing. After timing is performed for 10 ms, the UE enters the dormant period of the first C-DRX cycle. The inactive-period timer is a timer mechanism that is set in the active period and that is triggered by data, that is, when there is to-be-transmitted data in the active period, the inactive-period timer is triggered to start timing, so that actually, the duration of the active period is prolonged. For example, preconfigured duration of the active-period timer is 10 ms, and preconfigured duration of the inactive-period timer is 20 ms. Assuming that there is to-be-transmitted data when a time of the active-period timer is 6 ms, the inactive-period timer starts timing. After timing is performed for 20 ms, the UE enters the dormant period of the first C-DRX cycle. That is, a time segment from 6 to 26 ms may be viewed as an active period of the first C-DRX cycle. Further, if there is to-be-transmitted data at 18 ms, the inactive-period timer performs re-timing. That is, a time segment from 18 to 38 ms may be viewed as an active period of the first C-DRX cycle. If there is no to-be-transmitted data in a subsequent time segment, the UE enters the dormant period of the first C-DRX cycle after 38 ms, and so on.

It should be noted that because the first C-DRX cycle is configured for both the control node and the UE, both the control node and the UE include the two types of timers in the first C-DRX cycle: the active-period timer and the inactive-period timer. For a purpose of distinguishing, in this embodiment of the present invention, "first" and "second" are used to distinguish an active-period timer and an inactive-period timer on a control node side from those on a UE side, that is, the first inactive-period timer and a first active-period timer are used to perform timing for the control node in the active period of the first C-DRX cycle, and a second inactive-period timer and a second active-period timer are used to perform timing for the UE in the active period of the first C-DRX cycle. Unified description is given herein, and the description is applicable to the following embodiments.

It should be noted that generally, preconfigured timing duration of the first active-period timer is the same as that of the second active-period timer, and preconfigured timing duration of the first inactive-period timer is the same as that of the second inactive-period timer. Certainly, the preconfigured timing duration of the first active-period timer may be different from that of the second active-period timer, or the preconfigured timing duration of the first inactive-period timer may be different from that of the second inactive-period timer. This embodiment of the present invention sets no specific limitation thereto.

If the control node enables the first inactive-period timer in the active period of the first C-DRX cycle, and if there is to-be-transmitted data before the first inactive-period timer expires, the UE is always in the active period of the first C-DRX cycle, and therefore, the UE cannot enter the dormant period of the first C-DRX cycle, and the UE cannot measure the signal quality of the second RAT network in the dormant period of the first C-DRX cycle. In consideration of this, the control node disables the first inactive-period timer in this embodiment of the present invention.

In this way, after an active period configured by using the second active-period timer ends, the UE may quickly enter the dormant period of the first C-DRX cycle to measure the signal quality of the second RAT network. Therefore, the following problem is resolved: When the UE has to-be-transmitted data and signaling, the UE cannot perform inter-RAT measurement by using a dormant period of a C-DRX cycle, and consequently, a measurement time of inter-RAT measurement is overlong, and then a voice or data service is interrupted or drops.

In this embodiment of the present invention, after a control node in a first RAT network sends a measurement control message to UE in the first RAT network, the control node disables a first inactive-period timer, and performs downlink transmission for the UE in an active period of a first C-DRX cycle. Because the control node disables the first inactive-period timer, an active period of the UE may not be prolonged in a case of data triggering. Therefore, the UE may quickly enter a dormant period of the first C-DRX cycle to measure signal quality of a second RAT network. In this way, the following prior-art problem may be resolved: When the UE performs inter-RAT measurement by using C-DRX measurement optimization, and when the UE has to-be-transmitted data or signaling, the UE cannot be in a dormant period of a C-DRX cycle, and therefore, the UE cannot perform inter-RAT measurement by using the dormant period of the C-DRX cycle, and consequently, an inter-RAT measurement time is overlong, and then a voice or data service is interrupted or drops. Therefore, when performing inter-RAT measurement by using the C-DRX measurement optimization, the UE may quickly enter the dormant period of the C-DRX cycle, so as to effectively quicken measurement performed by the UE in the first RAT network on the signal quality of the second RAT network, and shorten the inter-RAT measurement time.

Optionally, an embodiment of the present invention further provides an inter-RAT measurement method. As shown in FIG. 2, the method includes the following steps:
S201. A control node in a first RAT network sends a measurement control message to UE in the first RAT network, where each C-DRX cycle includes a dormant period and an active period, and the measurement control message is used to instruct the UE to measure signal quality of a second RAT network in a dormant period of a first C-DRX cycle.
S202. The control node performs downlink transmission for the UE after receiving a measurement report sent by the UE.

For related description of step S201, refer to the embodiment shown in FIG. 1. Details are not described herein again in this embodiment of the present invention.

Specifically, in step S202 in this embodiment of the present invention, the measurement report may include a measurement result obtained by the UE by measuring the signal quality of the second RAT network, for example, a measurement result obtained by measuring reference signal received power (Reference Signal Received Power, RSRP for short) or reference signal received quality (Reference Signal Received Quality, RSRQ for short) of the second RAT network.

In this embodiment of the present invention, the control node performs downlink transmission for the UE after receiving the measurement report sent by the UE. That is, the control node controls downlink data or signaling to be transmitted after the UE finishes measuring the signal quality of the second RAT network in the dormant period of the first C-DRX cycle, where the downlink data or signaling is to be sent to the UE. In this way, the following prior-art problem may be resolved: When the UE performs inter-RAT measurement by using C-DRX measurement optimization, and when the UE has to-be-transmitted data or signaling, the UE cannot be in a dormant period of a C-DRX cycle, and therefore, the UE cannot perform inter-RAT measurement by using the dormant period of the C-DRX cycle, and consequently, an inter-RAT measurement time is overlong, and then a voice or data service is interrupted or drops. Therefore, when performing inter-RAT measurement by using the C-DRX measurement optimization, the UE can be in the dormant period of the C-DRX cycle in a measurement process, so as to effectively quicken measurement performed by the UE in the first RAT network on the signal quality of the second RAT network, and shorten the inter-RAT measurement time.

Optionally, an embodiment of the present invention further provides an inter-RAT measurement method. As shown in FIG. 3, the method includes the following steps:
S301. A control node in a first RAT network sends a measurement control message to UE in the first RAT network, where each C-DRX cycle includes a dormant period and an active period, and the measurement control message is used to instruct the UE to measure signal quality of a second RAT network in a dormant period of a first C-DRX cycle.
S302. The control node performs downlink transmission for the UE after a preconfigured timer expires, where T1 ≥ n × T, T1 represents a timing time of the timer, T represents the first C-DRX cycle, n ≥ 1, and n is an integer.

For related description of step S301, refer to the embodiment shown in FIG. 1. Details are not described herein again in this embodiment of the present invention. In step S302, the timing time T1 of the timer is one or more times as long as the first C-DRX cycle.

It should be noted that in step S302, the preconfigured timer usually starts timing after the control node sends the measurement control message to the UE in the first RAT network. Certainly, the preconfigured timer may start timing after another agreed time. This embodiment of the present invention sets no specific limitation thereto.

In this embodiment of the present invention, the control node performs downlink transmission for the UE after the preconfigured timer expires. That is, the control node may control, by configuring a time of the timer, the downlink data or signaling to be transmitted after the UE finishes measuring the signal quality of the second RAT network in the dormant period of the first C-DRX cycle, where the downlink data or signaling is to be sent to the UE. In this way, the following prior-art problem may be resolved: When the UE performs inter-RAT measurement by using C-DRX measurement optimization, and when the UE has to-be-transmitted data or signaling, the UE cannot be in a dormant period of a C-DRX cycle, and therefore, the UE cannot perform inter-RAT measurement by using the dormant period of the C-DRX cycle, and consequently, an inter-RAT measurement time is overlong, and then a voice or data service is interrupted or drops. Therefore, when performing inter-RAT measurement by using the C-DRX measurement optimization, the UE can be in the dormant period of the C-DRX cycle in a measurement process, so as to effectively quicken measurement performed by the UE in the first RAT network on the signal quality of the second RAT network, and shorten the inter-RAT measurement time.

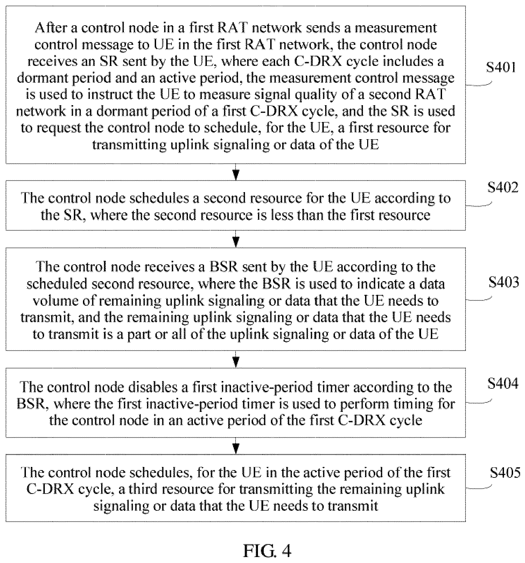

An embodiment of the present invention provides an inter-RAT measurement method. As shown in FIG. 4, the method includes the following steps:
S401. After a control node in a first RAT network sends a measurement control message to UE in the first RAT network, the control node receives a scheduling request (Scheduling Request, SR for short) sent by the UE, where each C-DRX cycle includes a dormant period and an active period, the measurement control message is used to instruct the UE to measure signal quality of a second RAT network in a dormant period of a first C-DRX cycle, and the SR is used to request the control node to schedule, for the UE, a first resource for transmitting uplink signaling or data of the UE.
S402. The control node schedules a second resource for the UE according to the SR, where the second resource is less than the first resource.
S403. The control node receives a buffer status report (Buffer Status Report, BSR for short) sent by the UE according to the scheduled second resource, where the BSR is used to indicate a data volume of remaining uplink signaling or data that the UE needs to transmit, and the remaining uplink signaling or data that the UE needs to transmit is a part or all of the uplink signaling or data of the UE.
S404. The control node disables a first inactive-period timer according to the BSR, where the first inactive-period timer is used to perform timing for the control node in an active period of the first C-DRX cycle.
S405. The control node schedules, for the UE in the active period of the first C-DRX cycle, a third resource for transmitting the remaining uplink signaling or data that the UE needs to transmit.

For description of a technical feature in step S401 that is the same as that in step S101, refer to the embodiment shown in FIG. 1. Details are not described herein again in this embodiment of the present invention.

Specifically, in step S402 in this embodiment of the present invention, after the control node receives the SR sent by the UE, the control node schedules the second resource for the UE. The second resource is less than the first resource, that is, the second resource cannot meet a requirement of the first resource requested by using the SR request. For example, the SR is used to request the control node to schedule, for the UE, 10000 resource blocks (Resource Block, RB for short) for transmitting the uplink signaling or data of the UE, but after receiving the SR, the control node may schedule, for the UE, only 100 RBs for transmitting uplink signaling or data of the UE. Certainly, the 100 RBs may be a maximum resource scheduling capability of the control node, or may not be a maximum resource scheduling capability of the control node. This embodiment of the present invention sets no specific limitation thereto.

Specifically, in step S403 in this embodiment of the present invention, because the control node does not schedule, for the UE, the first resource for transmitting the uplink signaling or data of the UE, but schedules, for the UE, only the second resource that cannot meet the requirement of the first resource, the UE may send the BSR to the control node. The BSR is used to indicate the data volume of the remaining uplink signaling or data that the UE needs to transmit, that is, the BSR is used to indicate a volume of remaining uplink data to be transmitted by the UE. The remaining uplink signaling or data that the UE needs to transmit is a part or all of the uplink signaling or data of the UE.

Specifically, in step S404 in this embodiment of the present invention, for a definition of the first inactive-period timer, refer to the foregoing method embodiment. Details are not described herein again in this embodiment of the present invention.

If the control node enables the first inactive-period timer in the active period of the first C-DRX cycle, and if there is to-be-transmitted data before the first inactive-period timer expires, the UE is always in the active period of the first C-DRX cycle, and therefore, the UE cannot enter the dormant period of the first C-DRX cycle, and the UE cannot measure the signal quality of the second RAT network in the dormant period of the first C-DRX cycle. In consideration of this, the control node disables the first inactive-period timer in this embodiment of the present invention.

In this way, after an active period configured by using a second active-period timer ends, the UE may quickly enter the dormant period of the first C-DRX cycle to measure the signal quality of the second RAT network. Therefore, the following problem is resolved: When the UE has to-be-transmitted data and signaling, the UE cannot perform inter-RAT measurement by using a dormant period of a C-DRX cycle, and consequently, a measurement time of inter-RAT measurement is overlong, and then a voice or data service is interrupted or drops.

In this embodiment of the present invention, after receiving an SR sent by UE, a control node does not directly schedule, for the UE, a first resource for transmitting uplink signaling or data of the UE, but schedules, for the UE, only a second resource less than the first resource. In this way, the UE needs to transmit only a part of the uplink signaling or data of the UE according to the second resource, but temporarily does not need to transmit all of the uplink signaling or data of the UE. The control node may receive a BSR sent by the UE, disable a first inactive-period timer according to the BSR, and schedule, for the UE in an active period of a first C-DRX cycle, a third resource for transmitting remaining uplink signaling or data that the UE needs to transmit. Because the control node disables the first inactive-period timer, an active period of the UE may not be prolonged in a case of data triggering. Therefore, the UE may quickly enter a dormant period of the first C-DRX cycle to measure signal quality of a second RAT network. In this way, the following prior-art problem may be resolved: When the UE performs inter-RAT measurement by using C-DRX measurement optimization, and when the UE has to-be-transmitted data or signaling, the UE cannot be in a dormant period of a C-DRX cycle, and therefore, the UE cannot perform inter-RAT measurement by using the dormant period of the C-DRX cycle, and consequently, an inter-RAT measurement time is overlong, and then a voice or data service is interrupted or drops. Therefore, when performing inter-RAT measurement by using the C-DRX measurement optimization, the UE may quickly enter the dormant period of the C-DRX cycle, so as to effectively quicken measurement performed by the UE in a first RAT network on the signal quality of the second RAT network, and shorten the inter-RAT measurement time.

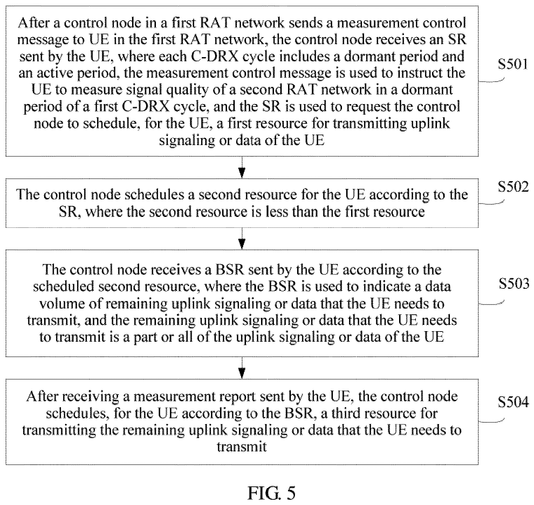

Optionally, an embodiment of the present invention further provides an inter-RAT measurement method. As shown in FIG 5, the method includes the following steps:
S501. After a control node in a first RAT network sends a measurement control message to UE in the first RAT network, the control node receives an SR sent by the UE, where each C-DRX cycle includes a dormant period and an active period, the measurement control message is used to instruct the UE to measure signal quality of a second RAT network in a dormant period of a first C-DRX cycle, and the SR is used to request the control node to schedule, for the UE, a first resource for transmitting uplink signaling or data of the UE.
S502. The control node schedules a second resource for the UE according to the SR, where the second resource is less than the first resource.
S503. The control node receives a BSR sent by the UE according to the scheduled second resource, where the BSR is used to indicate a data volume of remaining uplink signaling or data that the UE needs to transmit, and the remaining uplink signaling or data that the UE needs to transmit is a part or all of the uplink signaling or data of the UE.
S504. After receiving a measurement report sent by the UE, the control node schedules, for the UE according to the BSR, a third resource for transmitting the remaining uplink signaling or data that the UE needs to transmit.

For related description of steps S501 to S503, refer to the embodiment shown in FIG. 4. For related description of the measurement report in step S504, refer to the embodiment shown in FIG. 2. Details are not described herein again in this embodiment of the present invention.

In this embodiment of the present invention, after receiving an SR sent by UE, a control node does not directly schedule, for the UE, a first resource for transmitting uplink signaling or data of the UE, but schedules, for the UE, only a second resource less than the first resource. In this way, the UE needs to transmit only a part of the uplink signaling or data of the UE according to the second resource, but temporarily does not need to transmit all of the uplink signaling or data of the UE. The control node may receive a BSR sent by the UE. and after receiving a measurement report sent by the UE, the control node schedules, for the UE according to the BSR, a third resource for transmitting remaining uplink signaling or data that the UE needs to transmit. That is, the control node schedules the third resource after the UE finishes measuring signal quality of a second RAT network in a dormant period of a first C-DRX cycle. In this way, the following prior-art problem may be resolved: When the UE performs inter-RAT measurement by using C-DRX measurement optimization, and when the UE has to-be-transmitted data or signaling, the UE cannot be in a dormant period of a C-DRX cycle, and therefore, the UE cannot perform inter-RAT measurement by using the dormant period of the C-DRX cycle, and consequently, an inter-RAT measurement time is overlong, and then a voice or data service is interrupted or drops. Therefore, when performing inter-RAT measurement by using the C-DRX measurement optimization, the UE can be in the dormant period of the C-DRX cycle in a measurement process, so as to effectively quicken measurement performed by the UE in a first RAT network on the signal quality of the second RAT network, and shorten the inter-RAT measurement time.

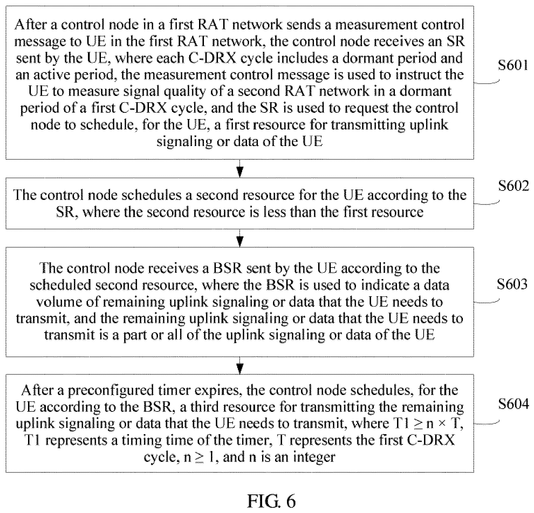

Optionally, an embodiment of the present invention further provides an inter-RAT measurement method. As shown in FIG. 6, the method includes the following steps:
S601. After a control node in a first RAT network sends a measurement control message to UE in the first RAT network, the control node receives an SR sent by the UE, where each C-DRX cycle includes a dormant period and an active period, the measurement control message is used to instruct the UE to measure signal quality of a second RAT network in a dormant period of a first C-DRX cycle, and the SR is used to request the control node to schedule, for the UE, a first resource for transmitting uplink signaling or data of the UE.
S602. The control node schedules a second resource for the UE according to the SR, where the second resource is less than the first resource.
S603. The control node receives a BSR sent by the UE according to the scheduled second resource, where the BSR is used to indicate a data volume of remaining uplink signaling or data that the UE needs to transmit, and the remaining uplink signaling or data that the UE needs to transmit is a part or all of the uplink signaling or data of the UE.
S604. After a preconfigured timer expires, the control node schedules, for the UE according to the BSR, a third resource for transmitting the remaining uplink signaling or data that the UE needs to transmit, where T1 ≥ n × T, T1 represents a timing time of the timer, T represents the first C-DRX cycle, n ≥ 1, and n is an integer.

For related description of steps S601 to S603, refer to the embodiment shown in FIG. 4. Details are not described herein again in this embodiment of the present invention. In step S604, the timing time T1 of the timer is one or more times as long as the first C-DRX cycle.

It should be noted that in step S604, the preconfigured timer usually starts timing after the control node sends the measurement control message to the UE in the first RAT network. Certainly, the preconfigured timer may start timing after another agreed time. This embodiment of the present invention sets no specific limitation thereto.

In this embodiment of the present invention, after receiving an SR sent by UE, a control node does not directly schedule, for the UE, a first resource for transmitting uplink signaling or data of the UE, but schedules, for the UE, only a second resource less than the first resource. In this way, the UE needs to transmit only a part of the uplink signaling or data of the UE according to the second resource, but temporarily does not need to transmit all of the uplink signaling or data of the UE. The control node may receive a BSR sent by the UE, and after a preconfigured timer expires, the control node schedules, for the UE according to the BSR, a third resource for transmitting remaining uplink signaling or data that the UE needs to transmit. That is, the control node controls, by configuring a time of the timer, the third resource to be scheduled after the UE finishes measuring signal quality of a second RAT network in a dormant period of a first C-DRX cycle. In this way, the following prior-art problem may be resolved: When the UE performs inter-RAT measurement by using C-DRX measurement optimization, and when the UE has to-be-transmitted data or signaling, the UE cannot be in a dormant period of a C-DRX cycle, and therefore, the UE cannot perform inter-RAT measurement by using the dormant period of the C-DRX cycle, and consequently, an inter-RAT measurement time is overlong, and then a voice or data service is interrupted or drops. Therefore, when performing inter-RAT measurement by using the C-DRX measurement optimization, the UE can be in the dormant period of the C-DRX cycle in a measurement process, so as to effectively quicken measurement perforated by the UE in a first RAT network on the signal quality of the second RAT network, and shorten the inter-RAT measurement time.

It should be noted that, in the embodiments shown in FIG. 4 to FIG. 6, the third resource may be the same as the first resource, or may be different from the first resource. For example, if the second resource is used to transmit only the BSR, the third resource is the same as the first resource, that is, the remaining uplink signaling or data that the UE needs to transmit is all of the uplink signaling or data of the UE. If the second resource may be further used to transmit a part of the uplink data in addition to the BSR, the third resource is different from the first resource, that is, the remaining uplink signaling or data that the UE needs to transmit is a part of the uplink signaling or data of the UE. The embodiments of the present invention set no specific limitation thereto.

Preferably, the second resource is used to transmit only the BSR.

That is, after receiving the SR sent by the UE, the control node schedules only one uplink resource that can be used to transmit only the BSR, so that the UE sends the BSR. In this way, the UE has no uplink resource for transmitting the uplink data or signaling of the UE, so that the UE may immediately suspend transmission of the uplink data or signaling. After measurement configuration is finished, the UE performs inter-RAT measurement in a timely manner by using the C-DRX measurement optimization, so as to further quicken the measurement perforated by the UE in the first RAT network on the signal quality of the second RAT network, and shorten the inter-RAT measurement time.

Optionally, in the embodiments shown in FIG. 1 to FIG. 6, the first C-DRX parameter and the measurement configuration parameter may be further used to instruct the UE to measure the signal quality of the second RAT network in the active period of the first C-DRX cycle by using a molding GAP mode, so as to further quicken the measurement process, and shorten the measurement time. The embodiments of the present invention set no specific limitation thereto.

The GAP mode is a mode in which measurement can be performed for only 6 ms in a cycle of 40 ms or 80 ms. The cycle of 40 ms or 80 ms may be the preconfigured duration of the active period of the first C-DRX cycle, or may be a time segment of the preconfigured duration of the active period of the first C-DRX cycle. The embodiments of the present invention set no specific limitation thereto.

Optionally, because the UE may be currently measuring signal quality of the first RAT network, in the embodiments shown in FIG. 1 to FIG. 6, the measurement configuration parameter is further used to instruct the UE to stop, in a process of measuring the signal quality of the second RAT network, measuring the signal quality of the first RAT network, so as to further quicken the process in which the UE measures the signal quality of the second RAT network, and shorten the measurement time. The embodiments of the present invention set no specific limitation thereto.

For example, the measurement configuration parameter carries only carrier information of the second RAT network, but does not carry carrier information of the first RAT network. Therefore, the UE is instructed to stop measuring the signal quality of the first RAT network, but measure only the signal quality of the second RAT network, so as to further quicken the process in which the UE measures the signal quality of the second RAT network, and shorten the measurement time.

Alternatively, if the UE stores carrier information of the first RAT network, the control node may instruct, by using the measurement configuration parameter, the UE to delete the carrier information or an event related to the carrier information. The embodiments of the present invention set no specific limitation thereto.

For example, the measurement configuration parameter may be used to instruct the UE to delete an A1 event, an A2 event, an A3 event, an A4 event, and/or an A5 event, so as to instruct the UE to stop measuring the signal quality of the first RAT network.

Specific meanings of the A1 event, the A2 event, the A3 event, the A4 event, and the A5 event are as follows:
The A1 event means that signal quality of a serving cell is higher than a threshold.

The A2 event means that signal quality of a serving cell is lower than a threshold.

The A3 event means that quality of a neighboring cell is higher than quality of a serving cell and is greater than an offset value. The A3 event is used for intra-frequency or inter-frequency coverage-based handover.

The A4 event means that quality of a neighboring cell is higher than a threshold. The A4 event is used for load-based handover, and can be used for load balancing.

The A5 event means that quality of a neighboring cell is higher than a threshold, and quality of a serving cell is lower than the threshold. The A5 event can be used for load balancing.

Certainly, the specific meanings of the foregoing events are merely for a purpose of illustration. An event that the UE may delete is not limited to the foregoing events. The embodiments of the present invention set no specific limitation thereto.

Further, the control node may send, in cycle, the measurement control message to the UE in the first RAT network according to preconfiguration; or the control node may send the measurement control message to the UE in the first RAT network after determining that the signal quality of the second RAT network is to be measured, so as to instruct the UE to measure the signal quality of the second RAT network in the dormant period of the first C-DRX cycle. The embodiments of the present invention set no specific limitation thereto. Therefore, in the embodiments shown in FIG. 1 to FIG. 6, before step S101, step S201, step S301, step S401, step S501, or step S601, the method may further include:
determining, by the control node in the first RAT network, that the signal quality of the second RAT network is to be measured.

For example, assuming that the first RAT network is an LTE network, the second RAT network is a 2G or 3G network, and the control node in the first RAT network is an eNB, typical application scenarios in which the control node in the first RAT network determines that the signal quality of the second RAT network is to be measured are as follows:
Scenario 1: In a CSFB process, the UE sends a request message to a mobility management entity (Mobile Managenment Entity, MME for short). The request message is used to request a CSFB.
   The MME sends a notification message to the eNB. The eNB moves the UE from the LTE network to a CS domain of the 2G or 3G network according to the notification message. For example, the eNB performs a process of handover from the LTE network to the CS domain of the 2G or 3G network, or a process of redirection from the LTE network to the 2G or 3G network, or a process of a network assisted cell change (network assisted cell change) from the LTE network to the 2G or 3G network.
Scenario 2: The UE performs a VoLTE service in the LTE network. The eNB determines to perform a process of handover from the LTE network to a CS domain of the 2G or 3G network, for example, when the LTE network cannot bear a voice service because signal quality of the LTE network becomes worse or the LTE network suffers heavy load.
Scenario 3: The UE performs a data service in the LTE network. The eNB determines to perform a process of handover from the LTE network to a PS domain of the 2G or 3G network, or a process of a network assisted cell change (network assisted cell change) from the LTE network to the 2G or 3G network, for example, when the LTE network cannot bear a data service because signal quality of the LTE network becomes worse or the LTE network suffers heavy load.

Certainly, the control node in the first RAT network may determine that the signal quality of the second RAT network is to be measured for another reason. The embodiments of the present invention set no specific limitation thereto.

Further, because the UE may be currently transmitting data, in the embodiments shown in FIG. 4 to FIG 6, after the control node in the first RAT network determines that the signal quality of the second RAT network is to be measured, the method may further include:
sending, by the control node, control signaling to the UE, where the control signaling is used to instruct the UE to stop sending uplink signaling or data of the UE, and is used to instruct the UE to send uplink signaling or data of the UE after the UE sends the measurement report.

Specifically, when the UE performs inter-RAT measurement by using the C-DRX measurement optimization, and when the UE sends uplink signaling or data, the UE cannot enter a dormant period of a C-DRX cycle, and therefore, the UE cannot perform inter-RAT measurement by using the C-DRX measurement optimization. In consideration of this, the control node in the first RAT network may send the control signaling to the UE after determining that the signal quality of the second RAT network is to be measured. The control signaling is used to instruct the UE to stop sending uplink signaling or data of the UE, and is used to instruct the UE to send uplink signaling or data of the UE after the UE sends the measurement report. In this way, according to the control signaling, the UE may stop sending uplink signaling or data of the UE, and may send uplink signaling or data of the UE after the UE sends the measurement report.

The control signaling may be a physical-layer discontinuous reception (Discontinuous Reception, DRX for short) command.

It should be noted that the step in which the control node sends the measurement control message to the UE and the step in which the control node sends the control signaling to the UE are not performed in a necessary sequence. The embodiments of the present invention set no specific limitation thereto. Optionally, the control signaling may be carried in the measurement control message. The embodiments of the present invention set no specific limitation thereto.

It may be understood that after receiving the measurement control message, the UE may automatically stop or suspend sending uplink signaling or data of the UE. The embodiments of the present invention set no specific limitation thereto.

Specifically, in the embodiments shown in FIG. 1 to FIG. 6, after the UE finishes measuring the signal quality of the second RAT network, the control node may receive the measurement report sent by the UE, and determine, according to the measurement report, to perform an interoperation from the first RAT network to the second RAT network. The embodiments of the present invention set no specific limitation thereto.

For example, the interoperation may specifically include:
handover from the first RAT network to a CS domain of the second RAT network; or
handover from the first RAT network to a PS domain of the second RAT network; or
cell reconstruction from the first RAT network to the second RAT network.

Certainly, the control node may determine, according to the measurement report, not to perform an interoperation from the first RAT network to the second RAT network, for example, when the first RAT network can bear a service of the UE because the signal quality of the first RAT network becomes better or load of the first RAT network is reduced. The embodiments of the present invention set no specific limitation thereto.

Optionally, in the embodiments shown in FIG 1 to FIG. 6, when receiving the measurement control message, the UE may be in the active period of the first C-DRX cycle, and cannot perform measurement in a timely manner. In consideration of this, in the embodiments of the present invention, after the control node in the first RAT network sends the measurement control message to the UE in the first RAT network, the methods may further include:
sending, by the control node, an instruction message to the UE, where the instruction message is used to instruct the UE to disable an active-period timer and a second inactive-period timer, so that the UE enters the dormant period of the first C-DRX cycle, where the active-period timer and the second inactive-period timer are used to perform timing for the UE in the active period of the first C-DRX cycle.

The active-period timer herein is actually the foregoing second active-period timer. For definitions of the second active-period timer and the second inactive-period timer, refer to the foregoing method embodiment. Details are not described herein again in the embodiments of the present invention.

In this way, if the UE is in the active period of the first C-DRX cycle when receiving the measurement control message, the UE quickly enters the dormant period of the first C-DRX cycle according to the instruction message sent by the control node, to measure the signal quality of the second RAT network. Therefore, the measurement performed by the UE in the first RAT network on the signal quality of the second RAT network is further quickened, and the inter-RAT measurement time is further shortened.

It should be noted that if the UE is in the dormant period of the first C-DRX cycle when receiving the measurement control message, the UE directly measures the signal quality of the second RAT network in the dormant period of the first C-DRX cycle. The embodiments of the present invention set no specific limitation thereto.

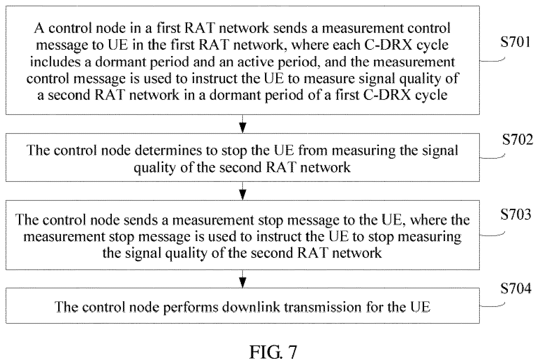

An embodiment of the present invention further provides an inter-RAT measurement method. As shown in FIG. 7, the method includes the following steps:
S701. A control node in a first RAT network sends a measurement control message to UE in the first RAT network, where each C-DRX cycle includes a dormant period and an active period, and the measurement control message is used to instruct the UE to measure signal quality of a second RAT network in a dormant period of a first C-DRX cycle.
S702. The control node determines to stop the UE from measuring the signal quality of the second RAT network.
S703. The control node sends a measurement stop message to the UE, where the measurement stop message is used to instruct the UE to stop measuring the signal quality of the second RAT network.
S704. The control node performs downlink transmission for the UE.

For related description of step S701, refer to the embodiment shown in FIG. 1. Details are not described herein again in this embodiment of the present invention.

Specifically, in step S702 in this embodiment of the present invention, when the UE measures the signal quality of the second RAT network in the dormant period of the first C-DRX cycle, the control node may determine, based on some special reasons, to stop the UE from measuring the signal quality of the second RAT network, for example, when the first RAT network can bear a service of the UE because the signal quality of the first RAT network becomes better or load of the first RAT network is reduced.

Specifically, in step S703 in this embodiment of the present invention, the measurement stop message may be specifically an RRC connection reconfiguration request message.

It should be noted that the step in which the control node receives downlink signaling or data this is to be sent to the UE and the step in which the control node determines to stop the UE from measuring the signal quality of the second RAT network are not performed in a necessary sequence. This embodiment of the present invention sets no specific limitation thereto.

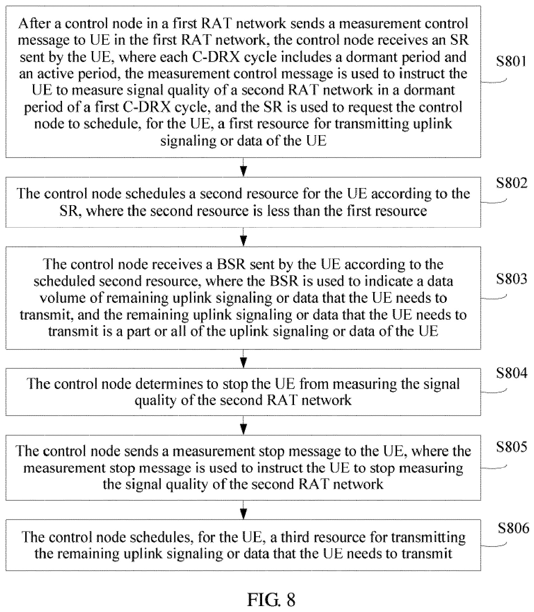

Optionally, an embodiment of the present invention further provides an inter-RAT measurement method. As shown in FIG. 8, the method includes the following steps:
S801. After a control node in a first RAT network sends a measurement control message to UE in the first RAT network, the control node receives an SR sent by the UE, where each C-DRX cycle includes a dormant period and an active period, the measurement control message is used to instruct the UE to measure signal quality of a second RAT network in a dormant period of a first C-DRX cycle, and the SR is used to request the control node to schedule, for the UE, a first resource for transmitting uplink signaling or data of the UE.
S802. The control node schedules a second resource for the UE according to the SR, where the second resource is less than the first resource.
S803. The control node receives a BSR sent by the UE according to the scheduled second resource, where the BSR is used to indicate a data volume of remaining uplink signaling or data that the UE needs to transmit, and the remaining uplink signaling or data that the UE needs to transmit is a part or all of the uplink signaling or data of the UE.
S804. The control node determines to stop the UE from measuring the signal quality of the second RAT network.
S805. The control node sends a measurement stop message to the UE, where the measurement stop message is used to instruct the UE to stop measuring the signal quality of the second RAT network.
S806. The control node schedules, for the UE, a third resource for transmitting the remaining uplink signaling or data that the UE needs to transmit.

For related description of steps S801 to S803, refer to the embodiment shown in FIG. 4. For related description of steps S804 and S805, refer to the embodiment shown in FIG. 7. Details are not described herein again in this embodiment of the present invention.

It should be noted that the step in which the control node receives the SR sent by the UE and the step in which the control node determines to stop the UE from measuring the signal quality of the second RAT network are not performed in a necessary sequence. This embodiment of the present invention sets no specific limitation thereto.

Based on the inter-RAT measurement method provided in FIG. 7 or FIG. 8, not only exception processing in the process in which the UE measures the signal quality of the second RAT network is ensured, but also normal transmission of uplink/downlink data or signaling is ensured.

Further, in order that the UE can normally perform a service, in the embodiments shown in FIG 7 and FIG. 8, after the control node determines to stop the UE from measuring the signal quality of the second RAT network, the methods may further include:
sending, by the control node, a second C-DRX parameter to the UE, where the second C-DRX parameter is used to configure a second C-DRX cycle for the UE, and a dormant period of the second C-DRX cycle is shorter than the dormant period of the first C-DRX cycle.

Specifically, the second C-DRX parameter may be configured in the following manner: In the whole second C-DRX cycle, duration of an active period is enabled to be as long as possible while being less than duration of the second C-DRX cycle, and duration of the dormant period is enabled to be as short as possible while being greater than 0. For example, the duration of the second C-DRX cycle may be set to 160 ms, and the duration of the dormant period may be set to 50 ms.

It should be noted that in the embodiments shown in FIG. 1 to FIG 6, the control node may also send the second C-DRX parameter to the UE after the UE finishes measuring the signal quality of the second RAT network, so that the UE configures the second C-DRX cycle according to the second C-DRX parameter. The embodiments of the present invention set no specific limitation thereto.

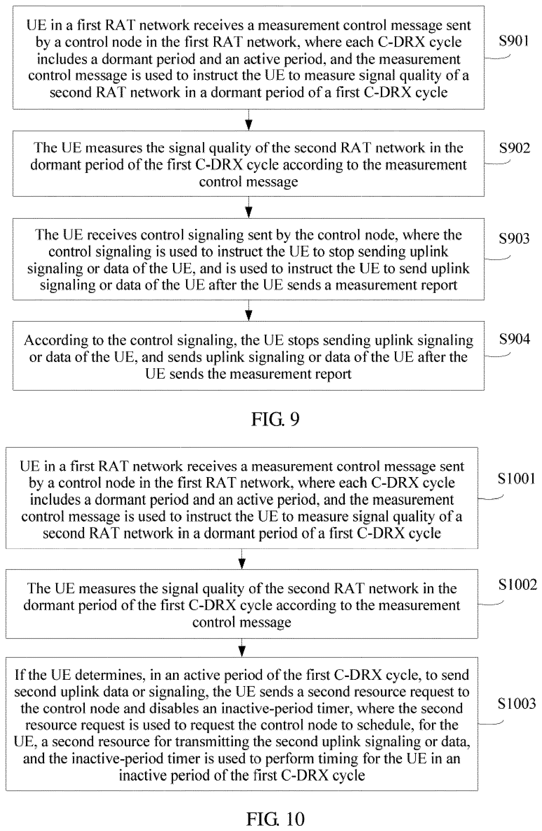

An embodiment of the present invention provides an inter-RAT measurement method. As shown in FIG. 9, the method includes the following steps:
S901. UE in a first RAT network receives a measurement control message sent by a control node in the first RAT network, where each C-DRX cycle includes a dormant period and an active period, and the measurement control message is used to instruct the UE to measure signal quality of a second RAT network in a dormant period of a first C-DRX cycle.
S902. The UE measures the signal quality of the second RAT network in the dormant period of the first C-DRX cycle according to the measurement control message.
S903. The UE receives control signaling sent by the control node, where the control signaling is used to instruct the UE to stop sending uplink signaling or data of the UE, and is used to instruct the UE to send uplink signaling or data of the UE after the UE sends a measurement report.
S904. According to the control signaling, the UE stops sending uplink signaling or data of the UE, and sends uplink signaling or data of the UE after the UE sends the measurement report.

For description of a technical feature in step S901 that is the same as that in step S101, refer to the embodiment shown in FIG. 1. Details are not described herein again in this embodiment of the present invention.

Specifically, in step S902 in this embodiment of the present invention, measuring the signal quality of the second RAT network may be specifically: measuring RSRP or RSRQ of the second RAT network.

Specifically, in step S903 and step S904 in this embodiment of the present invention, the control signaling may be specifically a DRX command.

The UE receives the control signaling sent by the control node, where the control signaling is used to instruct the UE to stop sending uplink signaling or data of the UE, and is used to instruct the UE to send uplink signaling or data of the UE after the UE sends the measurement report. That is, before the UE finishes measurement, the UE temporarily stops uplink transmission. In this way, an inactive-period timer is not triggered, so that after an active period configured by using an active-period timer ends, the UE may quickly enter the dormant period of the first C-DRX cycle to measure the signal quality of the second RAT network. Therefore, the following problem is resolved: When the UE performs inter-RAT measurement by using C-DRX measurement optimization, and when the UE has to-be-transmitted data or signaling, the UE cannot be in a dormant period of a C-DRX cycle, and therefore, the UE cannot perform inter-RAT measurement by using the dormant period of the C-DRX cycle, and consequently, an inter-RAT measurement time is overlong, and then a voice or data service is interrupted or drops. Therefore, when performing inter-RAT measurement by using the C-DRX measurement optimization, the UE is in the dormant period of the C-DRX cycle in a measurement process, so as to effectively quicken measurement performed by the UE in the first RAT network on the signal quality of the second RAT network, and shorten the inter-RAT measurement time.

For example, it is assumed that duration of the second active-period timer is set to 10 ms, duration of the second inactive-period timer is 20 ms, duration of the dormant period is set to 20 ms, and the signal quality of the second RAT network needs to be measured for 30 ms. If the UE has to-be-transmitted uplink data when a time of the second active-period timer is 6 ms, the second inactive-period timer starts timing. After timing is performed for 20 ms, the UE enters the dormant period of the first C-DRX cycle. That is, a time segment from 6 to 26 ms may be viewed as an active period of the first C-DRX cycle. If there is no to-be-transmitted data in a subsequent time segment, the UE enters the dormant period of the first C-DRX cycle after 26 ms, to start to measure the signal quality of the second RAT network. Because the measurement time is 30 ms, but the duration of the dormant period is set to 20 ms, measurement cannot be finished in one dormant period, and the UE enters an active period of a new first C-DRX cycle after timing is performed on the dormant period for 20 ms (that is, after 46 ms). If there is no to-be-transmitted data in the active period of the first C-DRX cycle, after the second active-period timer performs timing for 10 ms (after 56 ms), the UE enters a dormant period of the new first C-DRX cycle to continue measuring the signal quality of the second RAT network. A time of 66 ms is required for finishing the measurement. Certainly, after the UE enters the active period of the new first C-DRX cycle, if the UE has to-be-transmitted uplink data and consequently the second inactive-period timer is triggered, a longer measurement time is required. However, if according to the control signaling, the UE stops sending uplink signaling or data of the UE, and sends uplink signaling or data of the UE after the UE sends the measurement report, the UE enters the dormant period of the first C-DRX cycle after the active period of 10 ms ends, to start to measure the signal quality of the second RAT network. After timing is performed on the dormant period for 20 ms (after 30 ms), the UE enters an active period of a new first C-DRX cycle. Then, after the active period of 10 ms ends, the UE enters a dormant period of the new first C-DRX cycle to continue measuring the signal quality of the second RAT network. Only a time of 40 ms is required for finishing the measurement. Obviously, relative to the former, the latter effectively quickens the measurement performed by the UE in the first RAT network on the signal quality of the second RAT network, and shortens the inter-RAT measurement time.

It should be noted that step S901 and step S903 are not performed in a necessary sequence. Step S901 may be performed first and then step S903 is performed; or step S903 may be performed first and then step S901 is performed; or step S901 and step S903 may be performed simultaneously. For example, the measurement control message includes the control signaling. This embodiment of the present invention sets no specific limitation thereto.

Certainly, after receiving the measurement control message, the UE may automatically stop or suspend sending uplink data. This embodiment of the present invention sets no specific limitation thereto.

An embodiment of the present invention provides an inter-RAT measurement method. As shown in FIG. 10, the method includes the following steps:
S1001. UE in a first RAT network receives a measurement control message sent by a control node in the first RAT network, where each C-DRX cycle includes a dormant period and an active period, and the measurement control message is used to instruct the UE to measure signal quality of a second RAT network in a dormant period of a first C-DRX cycle.
S1002. The UE measures the signal quality of the second RAT network in the dormant period of the first C-DRX cycle according to the measurement control message.
S1003. If the UE determines, in an active period of the first C-DRX cycle, to send second uplink data or signaling, the UE sends a second resource request to the control node and disables an inactive-period timer, where the second resource request is used to request the control node to schedule, for the UE, a second resource for transmitting the second uplink signaling or data, and the inactive-period timer is used to perform timing for the UE in an inactive period of the first C-DRX cycle.

For description of a technical feature in step S1001 that is the same as that in step S101, refer to the embodiment shown in FIG. 1. Details are not described herein again in this embodiment of the present invention.

The inactive-period timer in step S1003 is actually the foregoing second inactive-period timer. For a definition of the second inactive-period timer, refer to the foregoing method embodiment. Details are not described herein again in this embodiment of the present invention.

If the UE enables the second inactive-period timer in the active period of the first C-DRX cycle, and if there is to-be-transmitted data before the second inactive-period timer expires, the UE is always in the active period of the first C-DRX cycle, and therefore, the UE cannot be in the dormant period of the first C-DRX cycle, and the UE cannot measure the signal quality of the second RAT network in the dormant period of the first C-DRX cycle. In consideration of this, the UE disables the inactive-period timer in this embodiment of the present invention.

In this way, after an active period configured by using the second active-period timer ends, the UE may quickly enter the dormant period of the first C-DRX cycle to measure the signal quality of the second RAT network. Therefore, the following problem is resolved: When the UE has to-be-transmitted data and signaling, the UE cannot perform inter-RAT measurement by using a dormant period of a C-DRX cycle, and consequently, a measurement time of inter-RAT measurement is overlong, and then a voice or data service is interrupted or drops.

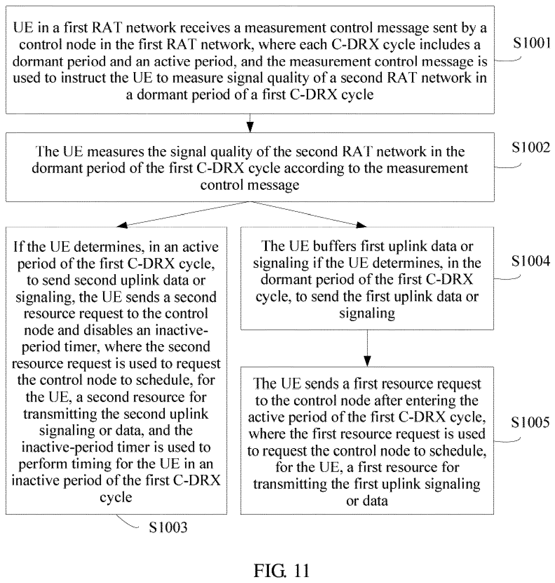

Optionally, in the dormant period of the first C-DRX cycle, if the UE has uplink data required to be sent, an end of the current dormant period is triggered, and the UE enters the active period of the first C-DRX cycle to send the data. In this way, the UE cannot perform inter-RAT measurement in the dormant period of the first C-DRX cycle. In consideration of this, as shown in FIG. 11, in this embodiment of the present invention, the method further includes the following steps:
S1004. The UE buffers first uplink data or signaling if the UE determines, in the dormant period of the first C-DRX cycle, to send the first uplink data or signaling.
S1005. The UE sends a first resource request to the control node after entering the active period of the first C-DRX cycle, where the first resource request is used to request the control node to schedule, for the UE, a first resource for transmitting the first uplink signaling or data.

That is, in this embodiment of the present invention, the UE first buffers the first uplink data or signaling if the UE determines, in the dormant period of the first C-DRX cycle, to send the first uplink data or signaling, and the UE sends the first resource request to the control node after entering the active period of the first C-DRX cycle. In this way, the following problem is resolved: When the UE performs inter-RAT measurement by using C-DRX measurement optimization, and when the UE has to-be-transmitted data or signaling, the UE cannot be in a dormant period of a C-DRX cycle, and therefore, the UE cannot perform inter-RAT measurement by using the dormant period of the C-DRX cycle, and consequently, an inter-RAT measurement time is overlong, and then a voice or data service is interrupted or drops. Therefore, when performing inter-RAT measurement by using the C-DRX measurement optimization, the UE is in the dormant period of the C-DRX cycle in a measurement process, so as to effectively quicken measurement performed by the UE in the first RAT network on the signal quality of the second RAT network, and shorten the inter-RAT measurement time.

It should be noted that in this embodiment of the present invention, the first resource request may be a scheduling request or a buffer status report, and the second resource request may be a scheduling request or a buffer status report. This embodiment of the present invention sets no specific limitation thereto.

It should be noted that the first C-DRX parameter may be carried in the measurement control message; or the first C-DRX parameter may be sent by the control node in the first RAT network to the UE when the UE accesses the first RAT network. This embodiment of the present invention sets no specific limitation thereto. This description is applicable to all embodiments of the present invention. Details are not described again in other embodiments.

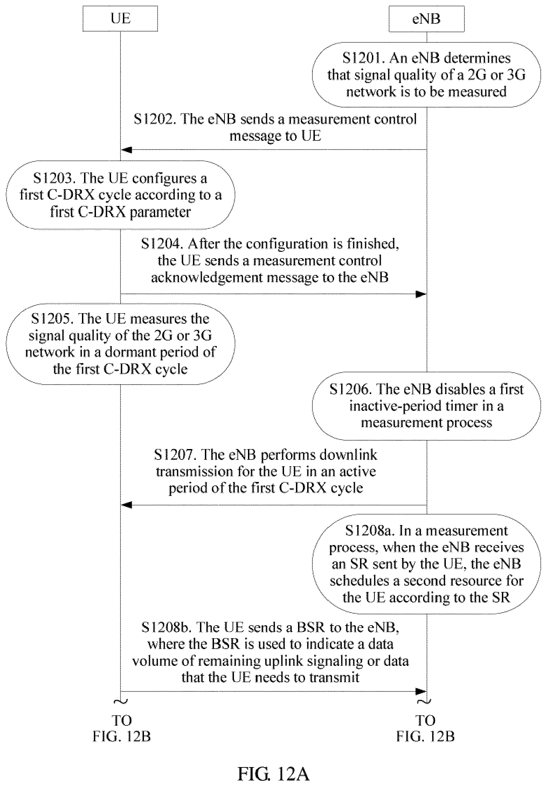

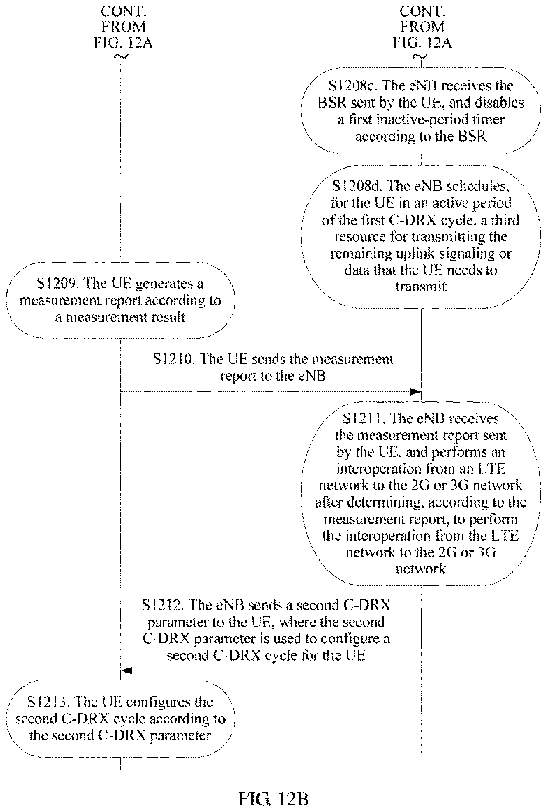

An embodiment of the present invention provides an inter-RAT measurement method. Specifically, an example in which a first RAT network is an LTE network, a second RAT network is a 2G or 3G network, and a control node in the first RAT network is an eNB is used for description. The method may be applied to a process in which UE in the LTE network measures signal quality of the 2G or 3G network. For example, the method may be applied to a CSFB process or a VoLTE service. As shown in FIG. 12A and FIG 12B, the method includes the following steps:
S1201. The eNB determines that signal quality of the 2G or 3G network is to be measured.
S1202. The eNB sends a measurement control message to UE.
   Each C-DRX cycle includes a dormant period and an active period, and the measurement control message is used to instruct the UE to measure the signal quality of the second RAT network in a dormant period of a first C-DRX cycle.
S1203. The UE configures a first C-DRX cycle according to a first C-DRX parameter.
S1204. After the configuration is finished, the UE sends a measurement control acknowledgement message to the eNB.
   Specifically, the measurement control acknowledgement message may be an RRC connection reconfiguration complete message.
S1205. The UE measures the signal quality of the 2G or 3G network in a dormant period of the first C-DRX cycle.
   Specifically, in the dormant period of the first C-DRX cycle, the UE does not receive data from a PDCCH, and may directly and continuously measure the signal quality of the 2G or 3G network, for example, RSRP or RSRQ of the 2G or 3G network.
   In a measurement process, if the eNB receives downlink signaling or data that is to be sent to the UE, steps S1206 and S1207 are performed.
   In a measurement process, if the eNB receives an SR sent by the UE, steps S1208a to S1208d are performed.
S1206. The eNB disables a first inactive-period timer in a measurement process.
S1207. The eNB performs downlink transmission for the UE in an active period of the first C-DRX cycle.
S1208a. In a measurement process, when the eNB receives an SR sent by the UE, the eNB schedules a second resource for the UE according to the SR.
   The SR is used to request the eNB to schedule, for the UE, a first resource for transmitting uplink signaling or data of the UE. The second resource is less than the first resource.
S1208b. The UE sends a BSR to the eNB, where the BSR is used to indicate a data volume of remaining uplink signaling or data that the UE needs to transmit.
   The remaining uplink signaling or data that the UE needs to transmit is a part or all of the uplink signaling or data of the UE.
S1208c. The eNB receives the BSR sent by the UE, and disables a first inactive-period timer according to the BSR.
S1208d. The eNB schedules, for the UE in an active period of the first C-DRX cycle, a third resource for transmitting the remaining uplink signaling or data that the UE needs to transmit.
S1209. The UE generates a measurement report according to a measurement result.
   It should be noted that in steps S1205 to S1209, the UE may need to measure the signal quality of the 2G or 3G network in dormant periods of multiple first C-DRX cycles to obtain the measurement result. This embodiment of the present invention sets no specific limitation thereto. For example, the UE may need to measure the signal quality of the 2G or 3G network in dormant periods of two first C-DRX cycles.
S1210. The UE sends the measurement report to the eNB.
S1211. The eNB receives the measurement report sent by the UE, and performs an interoperation from the LTE network to the 2G or 3G network after determining, according to the measurement report, to perform the interoperation from the LTE network to the 2G or 3G network.
   For example, the eNB performs handover from the LTE network to a CS domain of the 2G or 3G network; or
   the eNB performs handover from the LTE network to a PS domain of the 2G or 3G network; or
   the eNB performs cell reconstruction from the LTE network to the 2G or 3G network.
S1212. The eNB sends a second C-DRX parameter to the UE, where the second C-DRX parameter is used to configure a second C-DRX cycle for the UE.
   A dormant period of the second C-DRX cycle is shorter than the dormant period of the first C-DRX cycle.
S1213. The UE configures the second C-DRX cycle according to the second C-DRX parameter.

Specifically, in the inter-RAT measurement method provided in this embodiment of the present invention, for related description of the steps, refer to the foregoing method embodiments. Details are not described herein again in this embodiment of the present invention.

It should be noted that in the steps S1206 and S1207 in this embodiment of the present invention, the eNB may perform downlink transmission for the UE after receiving the measurement report sent by the UE; or the eNB may perform downlink transmission for the UE after a preconfigured timer expires. Details are not described herein again in this embodiment of the present invention.

It should be noted that in the steps S1208c and S1208d in this embodiment of the present invention, when the eNB receives the BSR sent by the UE, after receiving the measurement report sent by the UE, the eNB may schedule, for the UE according to the BSR, the third resource for transmitting the remaining uplink signaling or data that the UE needs to transmit; or after a preconfigured timer expires, the eNB may schedule, for the UE according to the BSR, the third resource for transmitting the remaining uplink signaling or data that the UE needs to transmit. Details are not described herein again in this embodiment of the present invention.

Because the embodiment corresponding to FIG. 12A and FIG. 12B is specific description of the foregoing embodiments, for technical effects that the embodiment can achieve, refer to the foregoing description. Details are not described herein again.

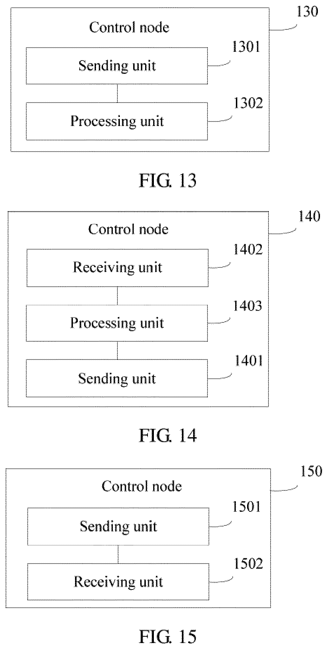

Corresponding to the foregoing method embodiment, an embodiment of the present invention provides a control node 130. The control node 130 is in a first RAT network. As shown in FIG. 13, the control node 130 includes a sending unit 1301 and a processing unit 1302.

The sending unit 1301 is configured to send a measurement control message to UE in the first RAT network. Each C-DRX cycle includes a dormant period and an active period, and the measurement control message is used to instruct the UE to measure signal quality of a second RAT network in a dormant period of a first C-DRX cycle.

The processing unit 1302 is configured to disable a first inactive-period timer. The first inactive-period timer is used to perform timing for the control node 130 in an active period of the first C-DRX cycle.

The sending unit 1301 is further configured to perform downlink transmission for the UE in the active period of the first C-DRX cycle.

Optionally, the processing unit 1302 is further configured to: before the sending unit 1301 sends the measurement control message to the UE in the first RAT network, determine that the signal quality of the second RAT network is to be measured.

Optionally, the measurement control message includes a measurement configuration parameter. The measurement configuration parameter is used to instruct the UE to stop, in a process of measuring the signal quality of the second RAT network, measuring signal quality of the first RAT network.

Optionally, the sending unit 1301 is further configured to send an instruction message to the UE after sending the measurement control message to the UE in the first RAT network. The instruction message is used to instruct the UE to disable an active-period timer and a second inactive-period timer, so that the UE enters the dormant period of the first C-DRX cycle. The active-period timer and the second inactive-period timer are used to perform timing for the UE in the active period of the first C-DRX cycle.

Because the control node in this embodiment can be used to execute the foregoing method, for technical effects that the control node can achieve, refer to the description in the foregoing method embodiment. Details are not described herein again.

Corresponding to the foregoing method embodiment, an embodiment of the present invention provides a control node 140. The control node 140 is in a first RAT network. As shown in FIG. 14, the control node 140 includes a sending unit 1401, a receiving unit 1402, and a processing unit 1403.

The sending unit 1401 is configured to send a measurement control message to UE in the first RAT network. Each C-DRX cycle includes a dormant period and an active period, and the measurement control message is used to instruct the UE to measure signal quality of a second RAT network in a dormant period of a first C-DRX cycle.

The receiving unit 1402 is configured to receive a scheduling request sent by the UE. The scheduling request is used to request the control node 140 to schedule, for the UE, a first resource for transmitting uplink signaling or data of the UE.

The processing unit 1403 is configured to schedule a second resource for the UE according to the scheduling request. The second resource is less than the first resource.

The receiving unit 1402 is further configured to receive a buffer status report sent by the UE according to the scheduled second resource. The buffer status report is used to indicate a data volume of remaining uplink signaling or data that the UE needs to transmit, and the remaining uplink signaling or data that the UE needs to transmit is a part or all of the uplink signaling or data of the UE.

The processing unit 1403 is further configured to disable a first inactive-period timer according to the buffer status report. The first inactive-period timer is used to perform timing for the control node 140 in an active period of the first C-DRX cycle.

The processing unit 1403 is further configured to schedule, for the UE in the active period of the first C-DRX cycle, a third resource for transmitting the remaining uplink signaling or data that the UE needs to transmit.

Optionally, the second resource is used to transmit only the buffer status report.

Optionally, the processing unit 1403 is further configured to: before the sending unit 1401 sends the measurement control message to the UE in the first RAT network, determine that the signal quality of the second RAT network is to be measured.

Optionally, the measurement control message includes a measurement configuration parameter. The measurement configuration parameter is used to instruct the UE to stop, in a process of measuring the signal quality of the second RAT network, measuring signal quality of the first RAT network.

Optionally, the sending unit 1401 is further configured to send control signaling to the UE after the processing unit 1403 determines that the signal quality of the second RAT network is to be measured. The control signaling is used to instruct the UE to stop sending uplink signaling or data of the UE, and is used to instruct the UE to send uplink signaling or data of the UE after the UE sends a measurement report.

Optionally, the sending unit 1401 is further configured to send an instruction message to the UE after sending the measurement control message to the UE in the first RAT network. The instruction message is used to instruct the UE to disable an active-period timer and a second inactive-period timer, so that the UE enters the dormant period of the first C-DRX cycle. The active-period timer and the second inactive-period timer are used to perform timing for the UE in the active period of the first C-DRX cycle.

Because the control node 140 in this embodiment can be used to execute the foregoing method, for technical effects that the control node 140 can achieve, refer to the description in the foregoing method embodiment. Details are not described herein again.

Corresponding to the foregoing method embodiment, an embodiment of the present invention provides a control node 150. The control node 150 is in a first RAT network. As shown in FIG. 15, the control node 150 includes a sending unit 1501 and a receiving unit 1502.

The sending unit 1501 is configured to send a measurement control message to UE in the first RAT network. Each C-DRX cycle includes a dormant period and an active period, and the measurement control message is used to instruct the UE to measure signal quality of a second RAT network in a dormant period of a first C-DRX cycle.

The receiving unit 1502 is configured to receive a measurement report sent by the UE.

The sending unit 1501 is further configured to perform downlink transmission for the UE after the receiving unit 1502 receives the measurement report sent by the UE.

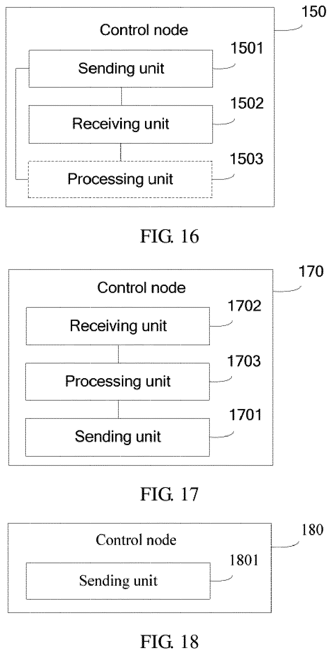

Optionally, as shown in FIG 16, the control node 150 further includes a processing unit 1503.

The processing unit 1503 is configured to: before the sending unit 1501 sends the measurement control message to the UE in the first RAT network, determine that the signal quality of the second RAT network is to be measured.

Optionally, the sending unit 1501 is further configured to send an instruction message to the UE after sending the measurement control message to the UE in the first RAT network. The instruction message is used to instruct the UE to disable an active-period timer and a second inactive-period timer, so that the UE enters the dormant period of the first C-DRX cycle. The active-period timer and the second inactive-period timer are used to perform timing for the UE in an active period of the first C-DRX cycle.

Because the control node 150 in this embodiment can be used to execute the foregoing method, for technical effects that the control node 150 can achieve, refer to the description in the foregoing method embodiment. Details are not described herein again.

Corresponding to the foregoing method embodiment, an embodiment of the present invention provides a control node 170. The control node 170 is in a first RAT network. As shown in FIG 17, the control node 170 includes a sending unit 1701, a receiving unit 1702, and a processing unit 1703.

The sending unit 1701 is configured to send a measurement control message to UE in the first RAT network. Each C-DRX cycle includes a dormant period and an active period, and the measurement control message is used to instruct the UE to measure signal quality of a second RAT network in a dormant period of a first C-DRX cycle.

The receiving unit 1702 is configured to receive a scheduling request sent by the UE. The scheduling request is used to request the control node 170 to schedule, for the UE, a first resource for transmitting uplink signaling or data of the UE.

The processing unit 1703 is configured to schedule a second resource for the UE according to the scheduling request. The second resource is less than the first resource.

The receiving unit 1702 is further configured to receive a buffer status report sent by the UE according to the scheduled second resource. The buffer status report is used to indicate a data volume of remaining uplink signaling or data that the UE needs to transmit, and the remaining uplink signaling or data that the UE needs to transmit is a part or all of the uplink signaling or data of the UE.

The receiving unit 1702 is further configured to receive a measurement report sent by the UE.

The processing unit 1703 is further configured to: after the receiving unit 1702 receives the measurement report sent by the UE, schedule, for the UE according to the buffer status report, a third resource for transmitting the remaining uplink signaling or data that the UE needs to transmit.

Optionally, the second resource is used to transmit only the buffer status report.

Optionally, the sending unit 1701 is further configured to send an instruction message to the UE after sending the measurement control message to the UE in the first RAT network. The instruction message is used to instruct the UE to disable an active-period timer and a second inactive-period timer, so that the UE enters the dormant period of the first C-DRX cycle. The active-period timer and the second inactive-period timer are used to perform timing for the UE in an active period of the first C-DRX cycle.

Because the control node 170 in this embodiment can be used to execute the foregoing method, for technical effects that the control node 170 can achieve, refer to the description in the foregoing method embodiment. Details are not described herein again.

Corresponding to the foregoing method embodiment, an embodiment of the present invention provides a control node 180. The control node 180 is in a first RAT network. As shown in FIG. 18, the control node 180 includes a sending unit 1801.

The sending unit 1801 is configured to send a measurement control message to UE in the first RAT network. Each C-DRX cycle includes a dormant period and an active period, and the measurement control message is used to instruct the UE to measure signal quality of a second RAT network in a dormant period of a first C-DRX cycle.

The sending unit 1801 is further configured to perform downlink transmission for the UE after a preconfigured timer expires. T1 ≥ n × T, T1 represents a timing time of the timer, T represents the first C-DRX cycle, n ≥ 1, and n is an integer.

Optionally, the sending unit 1801 is further configured to send an instruction message to the UE after sending the measurement control message to the UE in the first RAT network. The instruction message is used to instruct the UE to disable an active-period timer and a second inactive-period timer, so that the UE enters the dormant period of the first C-DRX cycle. The active-period timer and the second inactive-period timer are used to perform timing for the UE in an active period of the first C-DRX cycle.

Because the control node 180 in this embodiment can be used to execute the foregoing method, for technical effects that the control node 180 can achieve, refer to the description in the foregoing method embodiment. Details are not described herein again.

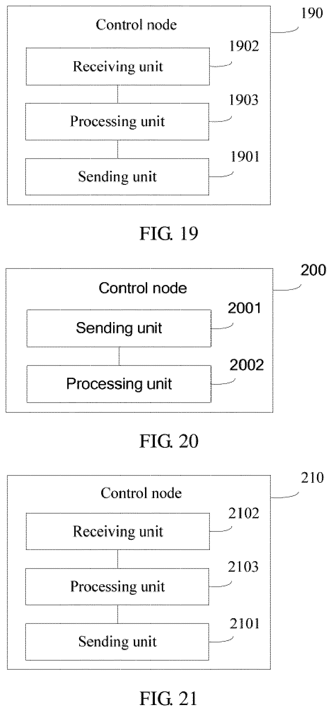

Corresponding to the foregoing method embodiment, an embodiment of the present invention provides a control node 190. The control node 190 is in a first RAT network. As shown in FIG. 19, the control node 190 includes a sending unit 1901, a receiving unit 1902, and a processing unit 1903.

The sending unit 1901 is configured to send a measurement control message to UE in the first RAT network. Each C-DRX cycle includes a dormant period and an active period, and the measurement control message is used to instruct the UE to measure signal quality of a second RAT network in a dormant period of a first C-DRX cycle.

The receiving unit 1902 is configured to receive a scheduling request sent by the UE. The scheduling request is used to request the control node 190 to schedule, for the UE, a first resource for transmitting uplink signaling or data of the UE.

The processing unit 1903 is configured to schedule a second resource for the UE according to the scheduling request. The second resource is less than the first resource.

The receiving unit 1902 is further configured to receive a buffer status report sent by the UE according to the scheduled second resource. The buffer status report is used to indicate a data volume of remaining uplink signaling or data that the UE needs to transmit, and the remaining uplink signaling or data that the UE needs to transmit is a part or all of the uplink signaling or data of the UE.

The processing unit 1903 is further configured to: after a preconfigured timer expires, schedule, for the UE according to the buffer status report, a third resource for transmitting the remaining uplink signaling or data that the UE needs to transmit. T1 ≥ n × T, T1 represents a timing time of the timer, T represents the first C-DRX cycle, n ≥ 1, and n is an integer.

Optionally, the sending unit 1901 is further configured to send an instruction message to the UE after sending the measurement control message to the UE in the first RAT network. The instruction message is used to instruct the UE to disable an active-period timer and a second inactive-period timer, so that the UE enters the dormant period of the first C-DRX cycle. The active-period timer and the second inactive-period timer are used to perform timing for the UE in an active period of the first C-DRX cycle.

Because the control node 190 in this embodiment can be used to execute the foregoing method, for technical effects that the control node 190 can achieve, refer to the description in the foregoing method embodiment. Details are not described herein again.

Corresponding to the foregoing method embodiment, an embodiment of the present invention provides a control node 200. The control node 200 is in a first RAT network. As shown in FIG. 20, the control node 200 includes a sending unit 2001 and a processing unit 2002.

The sending unit 2001 is configured to send a measurement control message to UE in the first RAT network. Each C-DRX cycle includes a dormant period and an active period, and the measurement control message is used to instruct the UE to measure signal quality of a second RAT network in a dormant period of a first C-DRX cycle.

The processing unit 2002 is configured to determine to stop the UE from measuring the signal quality of the second RAT network.

The sending unit 2001 is further configured to send a measurement stop message to the UE. The measurement stop message is used to instruct the UE to stop measuring the signal quality of the second RAT network.

The sending unit 2001 is further configured to perform downlink transmission for the UE.

Optionally, the sending unit 2001 is further configured to send a second C-DRX parameter to the UE after the processing unit 2002 determines to stop the UE from measuring the signal quality of the second RAT network. The second C-DRX parameter is used to configure a second C-DRX cycle for the UE, and a dormant period of the second C-DRX cycle is shorter than the dormant period of the first C-DRX cycle.

Because the control node 200 in this embodiment can be used to execute the foregoing method, for technical effects that the control node 200 can achieve, refer to the description in the foregoing method embodiment. Details are not described herein again.

Corresponding to the foregoing method embodiment, an embodiment of the present invention provides a control node 210. The control node 210 is in a first RAT network. As shown in FIG. 21, the control node 210 includes a sending unit 2101, a receiving unit 2102, and a processing unit 2103.

The sending unit 2101 is configured to send a measurement control message to UE in the first RAT network. Each C-DRX cycle includes a dormant period and an active period, and the measurement control message is used to instruct the UE to measure signal quality of a second RAT network in a dormant period of a first C-DRX cycle.

The receiving unit 2102 is configured to receive a scheduling request sent by the UE. The scheduling request is used to request the control node 210 to schedule, for the UE, a first resource for transmitting uplink signaling or data of the UE.

The processing unit 2103 is configured to schedule a second resource for the UE according to the scheduling request. The second resource is less than the first resource.

The receiving unit 2102 is further configured to receive a buffer status report sent by the UE according to the scheduled second resource. The buffer status report is used to indicate a data volume of remaining uplink signaling or data that the UE needs to transmit, and the remaining uplink signaling or data that the UE needs to transmit is a part or all of the uplink signaling or data of the UE.

The processing unit 2103 is further configured to determine to stop the UE from measuring the signal quality of the second RAT network.

The sending unit 2101 is further configured to send a measurement stop message to the UE. The measurement stop message is used to instruct the UE to stop measuring the signal quality of the second RAT network.

The processing unit 2103 is further configured to schedule, for the UE, a third resource for transmitting the remaining uplink signaling or data that the UE needs to transmit.

Optionally, the sending unit 2101 is further configured to send a second C-DRX parameter to the UE after the processing unit 2103 determines to stop the UE from measuring the signal quality of the second RAT network. The second C-DRX parameter is used to configure a second C-DRX cycle for the UE, and an active period of the second C-DRX cycle is longer than an active period of the first C-DRX cycle.

Because the control node 210 in this embodiment can be used to execute the foregoing method, for technical effects that the control node 210 can achieve, refer to the description in the foregoing method embodiment. Details are not described herein again.

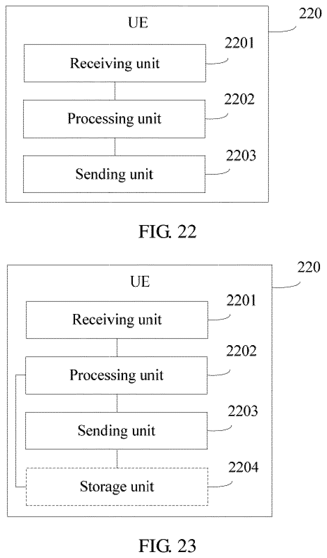

Corresponding to the foregoing method embodiment, an embodiment of the present invention provides UE 220. The UE 220 is in a first RAT network. As shown in FIG. 22, the UE 220 includes a receiving unit 2201, a processing unit 2202, and a sending unit 2203.

The receiving unit 2201 is configured to receive a measurement control message sent by a control node in the first RAT network. Each C-DRX cycle includes a dormant period and an active period, and the measurement control message is used to instruct the UE 220 to measure signal quality of a second RAT network in a dormant period of a first C-DRX cycle.

The receiving unit 2201 is further configured to receive control signaling sent by the control node. The control signaling is used to instruct the UE 220 to stop sending uplink signaling or data of the UE 220, and is used to instruct the UE 220 to send uplink signaling or data of the UE 220 after the UE 220 sends a measurement report.

The processing unit 2202 is configured to measure the signal quality of the second RAT network in the dormant period of the first C-DRX cycle according to the measurement control message.

The processing unit 2202 is further configured to stop, according to the control signaling, sending uplink signaling or data of the UE 220.

The sending unit 2203 is further configured to send uplink signaling or data of the UE 220 after sending the measurement report.

Because the UE 220 in this embodiment can be used to execute the foregoing method, for technical effects that the UE 220 can achieve, refer to the description in the foregoing method embodiment. Details are not described herein again.

Corresponding to the foregoing method embodiment, an embodiment of the present invention provides UE 220. The UE 220 is in a first RAT network. As shown in FIG. 22, the UE 220 includes a receiving unit 2201, a processing unit 2202, and a sending unit 2203.

The receiving unit 2201 is configured to receive a measurement control message sent by a control node in the first RAT network. Each C-DRX cycle includes a dormant period and an active period, and the measurement control message is used to instruct the UE 220 to measure signal quality of a second RAT network in a dormant period of a first C-DRX cycle.

The processing unit 2202 is configured to measure the signal quality of the second RAT network in the dormant period of the first C-DRX cycle according to the measurement control message.

The sending unit 2203 is further configured to send a second resource request to the control node if the processing unit 2202 determines, in an active period of the first C-DRX cycle, to send second uplink data or signaling. The second resource request is used to request the control node to schedule, for the UE 220, a second resource for transmitting the second uplink signaling or data.

The processing unit 2202 is further configured to disable an inactive-period timer if the processing unit 2202 determines, in the active period of the first C-DRX cycle, to send the second uplink data or signaling. The inactive-period timer is used to perform timing for the UE 220 in an inactive period of the first C-DRX cycle.

Optionally, as shown in FIG. 23, the UE 220 further includes a storage unit 2204.

The storage unit 2204 is configured to buffer first uplink data or signaling if the processing unit 2202 determines, in the dormant period of the first C-DRX cycle, to send the first uplink data or signaling.

The sending unit 2203 is configured to send a first resource request to the control node after the UE 220 enters the active period of the first C-DRX cycle. The first resource request is used to request the control node to schedule, for the UE 220, a first resource for transmitting the first uplink signaling or data.

Optionally, the first resource request is a scheduling request or a buffer status report, and the second resource request is a scheduling request or a buffer status report.

Because the UE 220 in this embodiment can be used to execute the foregoing method, for technical effects that the UE 220 can achieve, refer to the description in the foregoing method embodiment. Details are not described herein again.

It should be noted that in the foregoing embodiments shown in FIG. 13 to FIG. 23, an interaction unit configured to send a message or receive a message may be implemented by using a transmitter or a receiver, or may be implemented by using a transceiver. In a physical implementation, the transmitter and the transceiver may be implemented by using one physical entity, or may be implemented by using multiple physical entities. The receiver and the transceiver may be implemented by using one physical entity, or may be implemented by using multiple physical entities. The present invention sets no limitation thereto. For other units, for example, a processing unit may be implemented by using one or more processors, and a storage unit may be implemented by using one memory. The present invention sets no specific limitation thereto.

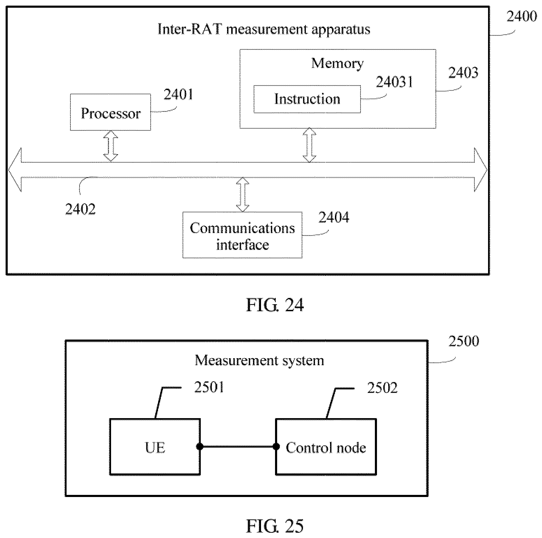

Corresponding to the foregoing method embodiments, an embodiment of the present invention provides an inter-RAT measurement apparatus 2400. As shown in FIG. 24, the inter-RAT measurement apparatus 2400 includes:
a processor 2401, a memory 2403, a bus 2402, and a communications interface 2404. By using the bus 2402, the processor 2401, the memory 2403, and the communications interface 2404 are connected and communicate with each other.

The processor 2401 may be a single-core or multi-core central processing unit, or an application-specific integrated circuit, or one or more integrated circuits configured to implement this embodiment of the present invention.

The memory 2403 may be a high-speed random access memory (Random Access Memory, RAM for short), or may be a non-volatile memory (non-volatile memory), for example, at least one magnetic disk storage.

The memory 2403 is configured to store a computer-executable instruction 24031. Specifically, the computer-executable instruction 24031 may include program code.

When the inter-RAT measurement apparatus 2400 runs, the processor 2401 executes the computer-executable instruction 24031, so as to perform a procedure of the inter-RAT measurement method according to any one of the method embodiments in FIG 1 to FIG. 11. When performing procedures of the inter-RAT measurement methods according to the method embodiments corresponding to FIG. 9 to FIG. 11, the apparatus 2400 is UE in a first RAT network. When performing procedures of the inter-RAT measurement methods according to the method embodiments corresponding to FIG. 1 to FIG. 8, the apparatus 2400 is a control node in a first RAT network.

Because the inter-RAT measurement apparatus 2400 in this embodiment can be used to execute the foregoing methods, for technical effects that the inter-RAT measurement apparatus 2400 can achieve, refer to the description in the foregoing method embodiments. Details are not described herein again.

Corresponding to the foregoing method embodiments, an embodiment of the present invention provides a measurement system 2500. As shown in FIG. 25, the measurement system 2500 includes UE 2501 in a first RAT network and a control node 2502 in the first RAT network.

The control node 2502 is configured to send a measurement control message to the UE 2501 after determining that signal quality of a second RAT network is to be measured. Each C-DRX cycle includes a dormant period and an active period, and the measurement control message is used to instruct the UE 2501 to measure the signal quality of the second RAT network in a dormant period of a first C-DRX cycle.

The UE 2501 is configured to: receive the measurement control message, and measure the signal quality of the second RAT network in the dormant period of the first C-DRX cycle according to the measurement control message.

The control node 2502 is further configured to send control signaling to the UE 2501 after determining that the signal quality of the second RAT network is to be measured. The control signaling is used to instruct the UE 2501 to stop sending uplink signaling or data of the UE 2501, and is used to instruct the UE 2501 to send uplink signaling or data of the UE 2501 after the UE 2501 sends a measurement report.

The UE 2501 is further configured to: receive the control signaling; and according to the control signaling, stop sending uplink signaling or data of the UE 2501, and send uplink signaling or data of the UE 2501 after the UE 2501 sends the measurement report.

Because the measurement system 2500 in this embodiment can be used to execute the foregoing methods, for technical effects that the measurement system 2500 can achieve, refer to the description in the foregoing method embodiments. Details are not described herein again.

A person skilled in the art should be aware that in one or more of the foregoing examples, the functions described in the present invention may be implemented by using hardware, software, firmware, or any combination thereof. When being implemented by software, these functions may be stored in a computer-readable medium or transmitted as one or more instructions or code in the computer-readable medium. The computer-readable medium includes a computer storage medium and a communications medium. The communications medium includes any medium that enables a computer program to be transmitted from one place to another place. The storage medium may be any available medium accessible to a general or dedicated computer.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An inter-RAT measurement method, wherein the method comprises:
sending (S101), by a control node in a first RAT network, a measurement control message to a user equipment, UE, in the first RAT network, wherein each connected-discontinuous reception, C-DRX, cycle comprises a dormant period and an active period, and the measurement control message is used to instruct the UE to measure signal quality of a second RAT network in a dormant period of a first C-DRX cycle;
the method further comprises:
disabling (S102), by the control node, a first inactive-period timer, wherein the first inactive-period timer is used to perform timing for the control node in an active period of the first C-DRX cycle; and
performing (S103), by the control node, downlink transmission for the UE in the active period of the first C-DRX cycle;
after the sending (S101), by a control node in a first RAT network, a measurement control message to UE in the first RAT network, further comprising:
sending, by the control node, an instruction message to the UE, wherein the instruction message is used to instruct the UE to enter the dormant period of the first C-DRX cycle by disabling an active-period timer and a second inactive-period timer, wherein the active-period timer and the second inactive-period timer are used to perform timing for the UE in the active period of the first C-DRX cycle.

2. The method according to claim 1, before the sending, by a control node in a first RAT network, a measurement control message to UE in the first RAT network, further comprising:
determining, by the control node, that the signal quality of the second RAT network is to be measured.

3. The method according to claim 1 or 2, wherein the measurement control message comprises a measurement configuration parameter, and the measurement configuration parameter is used to instruct the UE to stop, in a process of measuring the signal quality of the second RAT network, measuring signal quality of the first RAT network.

4. The method according to any one of claims 1 to 3, wherein the first RAT network is a Long Term Evolution, LTE, network, the second RAT network is a second generation, 2G, or third generation, 3G, network, and the control node in the first RAT network is an evolved NodeB, eNB.

5. An inter-RAT measurement method, wherein the method comprises:
receiving (S901), by a user equipment, UE, in a first RAT network, a measurement control message sent by a control node in the first RAT network, wherein each connected-discontinuous reception, C-DRX, cycle comprises a dormant period and an active period, and the measurement control message is used to instruct the UE to measure signal quality of a second RAT network in a dormant period of a first C-DRX cycle;
the method further comprises:
receiving, by the UE, an instruction message sent by the control node, wherein the instruction message is used to instruct the UE to enter the dormant period of the first C-DRX cycle by disabling an active-period timer and a second inactive-period timer, wherein the active-period timer and the second inactive-period timer are used to perform timing for the UE in the active period of the first C-DRX cycle;
measuring (S902), by the UE, the signal quality of the second RAT network in the dormant period of the first C-DRX cycle according to the measurement control message; and
according to the instruction message, disabling, by the UE, the active-period timer and the second inactive-period timer.

6. The method according to claim 5, wherein the first RAT network is a Long Term Evolution, LTE, network, the second RAT network is a second generation, 2G, or third generation, 3G, network, and the control node in the first RAT network is an evolved NodeB, eNB.

7. A control node (130), wherein the control node is in a first RAT network, and the control node comprises a sending unit (1301) and a processing unit (1302), wherein
the sending unit (1301) is configured to send a measurement control message to a user equipment, UE, in the first RAT network, wherein each connected-discontinuous reception, C-DRX, cycle comprises a dormant period and an active period, and the measurement control message is used to instruct the UE to measure signal quality of a second RAT network in a dormant period of a first C-DRX cycle;
the processing unit (1302) is configured to disable a first inactive-period timer, wherein the first inactive-period timer is used to perform timing for the control node in an active period of the first C-DRX cycle;
the sending unit (1301) is further configured to perform downlink transmission for the UE in the active period of the first C-DRX cycle; and
the sending unit (1301) is further configured to send an instruction message to the UE after sending the measurement control message to the UE in the first RAT network, wherein the instruction message is used to instruct the UE to enter the dormant period of the first C-DRX cycle by disabling an active-period timer and a second inactive-period timer, wherein the active-period timer and the second inactive-period timer are used to perform timing for the UE in the active period of the first C-DRX cycle.

8. The control node (130) according to claim 7, wherein
the processing unit (1302) is further configured to: before the sending unit sends the measurement control message to the UE in the first RAT network, determine that the signal quality of the second RAT network is to be measured.

9. The control node (130) according to claim 7 or 8, wherein the measurement control message comprises a measurement configuration parameter, and the measurement configuration parameter is used to instruct the UE to stop, in a process of measuring the signal quality of the second RAT network, measuring signal quality of the first RAT network.

10. The control node (130) according to any one of claims 7 to 9, wherein the first RAT network is a Long Term Evolution, LTE, network, the second RAT network is a second generation, 2G, or third generation, 3G, network, and the control node in the first RAT network is an evolved NodeB, eNB.

11. A user equipment (220), UE, wherein the UE is in a first RAT network, and the UE comprises a receiving unit (2201), a processing unit (2202), and a sending unit (2203), wherein
the receiving unit (2201) is configured to receive a measurement control message sent by a control node in the first RAT network, wherein each connected-discontinuous reception, C-DRX, cycle comprises a dormant period and an active period, and the measurement control message is used to instruct the UE to measure signal quality of a second RAT network in a dormant period of a first C-DRX cycle;
the receiving unit is further configured to receive an instruction message sent by the control node, wherein the instruction message is used to instruct the UE to enter the dormant period of the first C-DRX cycle by disabling an active-period timer and a second inactive-period timer, wherein the active-period timer and the second inactive-period timer are used to perform timing for the UE in the active period of the first C-DRX cycle;
the processing unit (2202) is configured to measure the signal quality of the second RAT network in the dormant period of the first C-DRX cycle according to the measurement control message;
the processing unit is further configured to disable, according to the instruction message, the active-period timer and the second inactive-period timer.

12. The UE (220) according to claim 11, wherein the first RAT network is a Long Term Evolution, LTE, network, the second RAT network is a second generation, 2G, or third generation, 3G, network, and the control node in the first RAT network is an evolved NodeB, eNB.

## Patentansprüche

1. Inter-RAT-Messverfahren, wobei das Verfahren umfasst:
Senden (S101), durch einen Steuerknoten in einem ersten RAT-Netz, einer Messungsteuerungsnachricht an ein Benutzergerät, UE, in dem ersten RAT-Netz, wobei jeder verbundene nichtkontinuierliche Empfangs-C-DRX-Zyklus eine Ruheperiode und eine Aktivperiode umfasst und die Messungsteuerungsnachricht verwendet wird, um das UE anzuweisen, die Signalqualität eines zweiten RAT-Netzes in einer Ruheperiode eines ersten C-DRX-Zyklus zu messen;
wobei das Verfahren ferner umfasst:
Deaktivieren (S102), durch den Steuerknoten, einer ersten Inaktivperioden-Zeitsteuerung, wobei die erste Inaktivperioden-Zeitsteuerung verwendet wird, um eine Zeitsteuerung für den Steuerknoten in einer Aktivperiode des ersten C-DRX-Zyklus durchzuführen; und
Durchführen (S103), durch den Steuerknoten, einer Abwärtsstreckenübertragung für das UE in der Aktivperiode des ersten C-DRX-Zyklus;
nach dem Senden (S101), durch einen Steuerknoten in einem ersten RAT-Netz, einer Messungsteuerungsnachricht an das UE in dem ersten RAT-Netz, ferner umfassend:
Senden, durch den Steuerknoten, einer Anweisungsnachricht an das UE, wobei die Anweisungsnachricht verwendet wird, um das UE anzuweisen, in die Ruheperiode des ersten C-DRX-Zyklus einzutreten, indem eine Aktivperioden-Zeitsteuerung und
eine zweite Inaktivperioden-Zeitsteuerung deaktiviert werden, wobei die Aktivperioden-Zeitsteuerung und die zweite Inaktivperioden-Zeitsteuerung verwendet werden, um eine Zeitsteuerung für das UE in der Aktivperiode des ersten C-DRX-Zyklus durchzuführen.

2. Verfahren nach Anspruch 1, vor dem Senden, durch einen Steuerknoten in einem ersten RAT-Netz, einer Messungsteuerungsnachricht an das UE in dem ersten RAT-Netz, ferner umfassend:
Bestimmen, durch den Steuerknoten, dass die Signalqualität des zweiten RAT-Netzes gemessen werden soll.

3. Verfahren nach Anspruch 1 oder 2, wobei die Messungsteuerungsnachricht einen Messungskonfigurationsparameter umfasst und der Messungskonfigurationsparameter verwendet wird, um das UE anzuweisen, in einem Prozess des Messens der Signalqualität des zweiten RAT-Netzes das Messen der Signalqualität des ersten RAT-Netzes zu stoppen.

4. Verfahren nach einem der Ansprüche 1 bis 3, wobei das erste RAT-Netz ein "Long Term Evolution"-LTE-Netz ist, das zweite RAT-Netz ein Netz der zweiten Generation, 2G, oder dritten Generation, 3G, ist, und der Steuerknoten in dem ersten RAT-Netz ein entwickelter Knoten B, eNB, ist.

5. Inter-RAT-Messverfahren, wobei das Verfahren umfasst:
Empfangen (S901), durch ein Benutzergerät, UE, in einem ersten RAT-Netz, einer Messungsteuerungsnachricht, die durch einen Steuerknoten in dem ersten RAT-Netz gesendet wird, wobei jeder verbundene nichtkontinuierliche Empfangs-C-DRX-Zyklus eine Ruheperiode und eine Aktivperiode umfasst und die Messungsteuerungsnachricht verwendet wird, das UE anzuweisen, die Signalqualität eines zweiten RAT-Netzes in einer Ruheperiode eines ersten C-DRX-Zyklus zu messen;
wobei das Verfahren ferner umfasst:
Empfangen, durch das UE, einer Anweisungsnachricht, die durch den Steuerknoten gesendet wird, wobei die Anweisungsnachricht verwendet wird, um das UE anzuweisen, in die Ruheperiode des ersten C-DRX-Zyklus einzutreten, indem eine Aktivperioden-Zeitsteuerung und eine zweite Inaktivperioden-Zeitsteuerung deaktiviert werden, wobei die Aktivperioden-Zeitsteuerung und die zweite Inaktivperioden-Zeitsteuerung verwendet werden, um eine Zeitsteuerung für das UE in der Aktivperiode des ersten C-DRX-Zyklus durchzuführen;
Messen (S902), durch das UE, der Signalqualität des zweiten RAT-Netzes in der Ruheperiode des ersten C-DRX-Zyklus gemäß der Messungsteuerungsnachricht; und gemäß der Anweisungsnachricht, Deaktivieren, durch das UE, der Aktivperioden-Zeitsteuerung und der zweiten Inaktivperioden-Zeitsteuerung.

6. Verfahren nach Anspruch 5, wobei das erste RAT-Netz ein "Long Term Evolution"-LTE-Netz ist, das zweite RAT-Netz ein Netz der zweiten Generation, 2G, oder dritten Generation, 3G, ist, und der Steuerknoten in dem ersten RAT-Netz ein entwickelter Knoten B, eNB, ist.

7. Steuerknoten (130), wobei sich der Steuerknoten in einem ersten RAT-Netz befindet und der Steuerknoten eine Sendeeinheit (1301) und eine Verarbeitungseinheit (1302) umfasst, wobei
die Sendeeinheit (1301) dafür ausgelegt ist, eine Messungsteuerungsnachricht an ein Benutzergerät, UE, in dem ersten RAT-Netz zu senden, wobei jeder verbundene nichtkontinuierliche Empfangs-C-DRX-Zyklus eine Ruheperiode und eine Aktivperiode umfasst und die Messungsteuerungsnachricht verwendet wird, um das UE anzuweisen, die Signalqualität eines zweiten RAT-Netzes in einer Ruheperiode eines ersten C-DRX-Zyklus zu messen;
die Verarbeitungseinheit (1302) dafür ausgelegt ist, eine erste Inaktivperioden-Zeitsteuerung zu deaktivieren, wobei die erste Inaktivperioden-Zeitsteuerung verwendet wird, um eine Zeitsteuerung für den Steuerknoten in einer Aktivperiode des ersten C-DRX-Zyklus durchzuführen;
die Sendeeinheit (1301) ferner dafür ausgelegt ist, eine Abwärtsstreckenübertragung für das UE in der Aktivperiode des ersten C-DRX-Zyklus durchzuführen; und
die Sendeeinheit (1301) ferner dafür ausgelegt ist, eine Anweisungsnachricht an das UE zu senden, nachdem die Messungsteuerungsnachricht an das UE in dem ersten RAT-Netz gesendet wurde, wobei die Anweisungsnachricht verwendet wird, um das UE anzuweisen, in die Ruheperiode des ersten C-DRX-Zyklus einzutreten, indem eine Aktivperioden-Zeitsteuerung und eine zweite Inaktivperioden-Zeitsteuerung deaktiviert werden, wobei die Aktivperioden-Zeitsteuerung und die zweite Inaktivperioden-Zeitsteuerung verwendet werden, um eine Zeitsteuerung für das UE in der Aktivperiode des ersten C-DRX-Zyklus durchzuführen.

8. Steuerknoten (130) nach Anspruch 7, wobei
die Verarbeitungseinheit (1302) ferner dafür ausgelegt ist, bevor die Sendeeinheit die Messungsteuerungsnachricht an das UE in dem ersten RAT-Netz sendet, zu bestimmen, dass die Signalqualität des zweiten RAT-Netzes gemessen werden soll.

9. Steuerknoten (130) nach Anspruch 7 oder 8, wobei die Messungsteuerungsnachricht einen Messungskonfigurationsparameter umfasst und der Messungskonfigurationsparameter verwendet wird, um das UE anzuweisen, in einem Prozess des Messens der Signalqualität des zweiten RAT-Netzes das Messen der Signalqualität des ersten RAT-Netzes zu stoppen.

10. Steuerknoten (130) nach einem der Ansprüche 7 bis 9, wobei das erste RAT-Netz ein "Long Term Evolution"-LTE-Netz ist, das zweite RAT-Netz ein Netz der zweiten Generation, 2G, oder dritten Generation, 3G, ist, und der Steuerknoten in dem ersten RAT-Netz ein entwickelter Knoten B, eNB, ist.

11. Benutzergerät (220), UE, wobei sich das UE in einem ersten RAT-Netz befindet und das UE eine Empfangseinheit (2201), eine Verarbeitungseinheit (2202) und eine Sendeeinheit (2203) umfasst, wobei
die Empfangseinheit (2201) dafür ausgelegt ist, eine Messungsteuerungsnachricht zu empfangen, die durch einen Steuerknoten in dem ersten RAT-Netz gesendet wird, wobei jeder verbundene nichtkontinuierliche Empfangs-C-DRX-Zyklus eine Ruheperiode und eine Aktivperiode umfasst und die Messungsteuerungsnachricht verwendet wird, um das UE anzuweisen, die Signalqualität eines zweiten RAT-Netzes in eine Ruheperiode eines ersten C-DRX-Zyklus zu messen;
die Empfangseinheit ferner dafür ausgelegt ist, eine Anweisungsnachricht zu empfangen, die durch den Steuerknoten gesendet wird, wobei die Anweisungsnachricht verwendet wird, um das UE anzuweisen, in die Ruheperiode des ersten C-DRX-Zyklus einzutreten, indem eine Aktivperioden-Zeitsteuerung und eine zweite Inaktivperioden-Zeitsteuerung deaktiviert werden, wobei die Aktivperioden-Zeitsteuerung und die zweite Inaktivperioden-Zeitsteuerung verwendet werden, um eine Zeitsteuerung für das UE in der Aktivperiode des ersten C-DRX-Zyklus durchzuführen;
die Verarbeitungseinheit (2202) dafür ausgelegt ist, die Signalqualität des zweiten RAT-Netzes in der Ruheperiode des ersten C-DRX-Zyklus gemäß der Messungsteuerungsnachricht zu messen;
die Verarbeitungseinheit ferner dafür ausgelegt ist, gemäß der Anweisungsnachricht die Aktivperioden-Zeitsteuerung und die zweite Inaktivperioden-Zeitsteuerung zu deaktivieren.

12. UE (220) nach Anspruch 11, wobei das erste RAT-Netz ein "Long Term Evolution"-LTE-Netz ist, das zweite RAT-Netz ein Netz der zweiten Generation, 2G, oder dritten Generation, 3G, ist, und der Steuerknoten in dem ersten RAT-Netz ein entwickelter Knoten B, eNB, ist.

## Revendications

1. Procédé de mesure inter-RAT, dans lequel le procédé comprend de :
envoyer (S101), par un noeud de commande dans un premier réseau RAT, un message de commande de mesure à un équipement utilisateur, UE, dans le premier réseau RAT, dans lequel chaque cycle de réception discontinue en mode connecté, C-DRX, comprend une période de repos et une période active, et le message de commande de mesure est utilisé pour ordonner à l'UE de mesurer la qualité de signal d'un second réseau RAT dans une période de repos d'un premier cycle C-DRX ;
le procédé comprend en outre de :
désactiver (S102), par le noeud de commande, un premier temporisateur de période inactive, dans lequel le premier temporisateur de période inactive est utilisé pour effectuer une temporisation pour le noeud de commande dans une période active du premier cycle C-DRX ; et
effectuer (S103), par le noeud de commande, une transmission de liaison descendante pour l'UE dans la période active du premier cycle C-DRX ;
après l'envoi (S101), par un noeud de commande dans un premier réseau RAT, d'un message de commande de mesure à destination de l'UE dans le premier réseau RAT, comprenant en outre de :
envoyer, par le noeud de commande, un message d'instruction à l'UE, dans lequel le message d'instruction est utilisé pour ordonner à l'UE d'entrer dans la période de repos du premier cycle C-DRX en désactivant un temporisateur de période active et un second temporisateur de période inactive, dans lequel le temporisateur de période active et le second temporisateur de période inactive sont utilisés pour effectuer une temporisation pour l'UE dans la période active du premier cycle C-DRX.

2. Procédé selon la revendication 1, avant l'envoi, par un noeud de commande dans un premier réseau RAT, d'un message de commande de mesure à destination de l'UE dans le premier réseau RAT, comprenant en outre de :
déterminer, par le noeud de commande, que la qualité de signal du second réseau RAT doit être mesurée.

3. Procédé selon la revendication 1 ou 2, dans lequel le message de commande de mesure comprend un paramètre de configuration de mesure, et le paramètre de configuration de mesure est utilisé pour ordonner à l'UE d'arrêter, dans un processus de mesure de la qualité de signal du second réseau RAT, de mesurer la qualité de signal du premier réseau RAT.

4. Procédé selon l'une quelconque des revendications 1 à 3, dans lequel le premier réseau RAT est un réseau d'évolution à long terme, LTE, le second réseau RAT est un réseau de deuxième génération, 2G ou de troisième génération, 3G, et le noeud de commande dans le premier réseau RAT est un noeud B évolué, eNB.

5. Procédé de mesure inter-RAT, dans lequel le procédé comprend de :
recevoir (S901), par un équipement utilisateur, UE, dans un premier réseau RAT, un message de commande de mesure envoyé par un noeud de commande dans le premier réseau RAT, dans lequel chaque cycle de réception discontinue en mode connecté, C-DRX, comprend une période de repos et une période active, et le message de commande de mesure est utilisé pour ordonner à l'UE de mesurer la qualité de signal d'un second réseau RAT dans une période de repos d'un premier cycle C-DRX ;
le procédé comprend en outre de :
recevoir, par l'UE, un message d'instruction envoyé par le noeud de commande, dans lequel le message d'instruction est utilisé pour ordonner à l'UE d'entrer dans la période de repos du premier cycle C-DRX en désactivant un temporisateur de période active et un second temporisateur de période inactive, dans lequel le temporisateur de période active et le second temporisateur de période inactive sont utilisés pour effectuer une temporisation pour l'UE dans la période active du premier cycle C-DRX ;
mesurer (S902), par l'UE, la qualité de signal du second réseau RAT dans la période de repos du premier cycle C-DRX conformément au message de commande de mesure ; et
conformément au message d'instruction, désactiver, par l'UE, le temporisateur de période active et le second temporisateur de période inactive.

6. Procédé selon la revendication 5, dans lequel le premier réseau RAT est un réseau d'évolution à long terme, LTE, le second réseau RAT est un réseau de deuxième génération, 2G ou de troisième génération, 3G, et le noeud de commande dans le premier réseau RAT est un noeud B évolué, eNB.

7. Noeud de commande (130), dans lequel le noeud de commande se trouve dans un premier réseau RAT, et le noeud de commande comprend une unité d'envoi (1301) et une unité de traitement (1302), dans lequel
l'unité d'envoi (1301) est configurée pour envoyer un message de commande de mesure à un équipement utilisateur, UE, dans le premier réseau RAT, dans lequel chaque cycle de réception discontinue en mode connecté, C-DRX, comprend une période de repos et une période active, et le message de commande de mesure est utilisé pour ordonner à l'UE de mesurer la qualité de signal d'un second réseau RAT dans une période de repos d'un premier cycle C-DRX ;
l'unité de traitement (1302) est configurée pour désactiver un premier temporisateur de période inactive, dans lequel le premier temporisateur de période inactive est utilisé pour effectuer une temporisation pour le noeud de commande dans une période active du premier cycle C-DRX ;
l'unité d'envoi (1301) est en outre configurée pour effectuer une transmission de liaison descendante pour l'UE dans la période active du premier cycle C-DRX ; et
l'unité d'envoi (1301) est en outre configurée pour envoyer un message d'instruction à l'UE après l'envoi du message de commande de mesure à l'UE dans le premier réseau RAT, dans lequel le message d'instruction est utilisé pour ordonner à l'UE d'entrer dans la période de repos du premier cycle C-DRX en désactivant un temporisateur de période active et un second temporisateur de période inactive, dans lequel le temporisateur de période active et le second temporisateur de période inactive sont utilisés pour effectuer une temporisation pour l'UE dans la période active du premier cycle C-DRX.

8. Noeud de commande (130) selon la revendication 7, dans lequel
l'unité de traitement (1302) est en outre configurée pour : avant que l'unité d'envoi n'envoie le message de commande de mesure à l'UE dans le premier réseau RAT, déterminer que la qualité de signal du second réseau RAT doit être mesurée.

9. Noeud de commande (130) selon la revendication 7 ou 8, dans lequel le message de commande de mesure comprend un paramètre de configuration de mesure, et le paramètre de configuration de mesure est utilisé pour ordonner à l'UE d'arrêter, dans un processus de mesure de la qualité de signal du second réseau RAT, de mesurer la qualité de signal du premier réseau RAT.

10. Noeud de commande (130) selon l'une quelconque des revendications 7 à 9, dans lequel le premier réseau RAT est un réseau d'évolution à long terme, LTE, le second réseau RAT est un réseau de deuxième génération, 2G ou de troisième génération, 3G, et le noeud de commande dans le premier réseau RAT est un noeud B évolué, eNB.

11. Équipement utilisateur (220), UE, dans lequel l'UE se trouve dans un premier réseau RAT, et l'UE comprend une unité de réception (2201), une unité de traitement (2202), et une unité d'envoi (2203), dans lequel
l'unité de réception (2201) est configurée pour recevoir un message de commande de mesure envoyé par un noeud de commande dans le premier réseau RAT, dans lequel chaque cycle de réception discontinue en mode connecté, C-DRX, comprend une période de repos et une période active, et le message de commande de mesure est utilisé pour ordonner à l'UE de mesurer la qualité de signal d'un second réseau RAT dans une période de repos d'un premier cycle C-DRX ;
l'unité de réception est en outre configurée pour recevoir un message d'instruction envoyé par le noeud de commande, dans lequel le message d'instruction est utilisé pour ordonner à l'UE d'entrer dans la période de repos du premier cycle C-DRX en désactivant un temporisateur de période active et un second temporisateur de période inactive, dans lequel le temporisateur de période active et le second temporisateur de période inactive sont utilisés pour effectuer une temporisation pour l'UE dans la période active du premier cycle C-DRX ;
l'unité de traitement (2202) est configurée pour mesurer la qualité de signal du second réseau RAT dans la période de repos du premier cycle C-DRX conformément au message de commande de mesure ;
l'unité de traitement est en outre configurée pour désactiver, conformément au message d'instruction, le temporisateur de période active et le second temporisateur de période inactive.

12. UE (220) selon la revendication 11, dans lequel le premier réseau RAT est un réseau d'évolution à long terme, LTE, le second réseau RAT est un réseau de deuxième génération, 2G ou de troisième génération, 3G, et le noeud de commande dans le premier réseau RAT est un noeud B évolué, eNB.
